# EUROPEAN PATENT SPECIFICATION

(11) **EP 4 422 326 B1**
(45) Date of publication and mention of the grant of the patent: **02.09.2026**
(21) Application number: 22891719.1
(22) Date of filing: 12.10.2022
(51) Int. Cl.: H04W 74/00, H04W 74/04, H04W 72/0446, H04W 74/08, H04W 74/0833

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 12.11.2021 CN 202111343098
(43) Date of publication of application: 28.08.2024
(73) Proprietor: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN); LI, Rong, Shenzhen, Guangdong 518129 (CN)
(74) Representative: Gill Jennings & Every LLP
(86) International application number: PCT/CN2022/124834
(87) International publication number: WO 2023/082920

(56) References cited:
- WO-A1-2021/164579
- WO-A1-2021/201586
- US-A1- 2018 220 466
- US-A1- 2021 084 687
- US-A1- 2021 243 812
- US-A1- 2021 251 014
- US-A1- 2022 408 389

## Description

### TECHNICAL FIELD

This application relates to the field of wireless technologies, and in particular, to a communication method and a communication apparatus.

### BACKGROUND

A random access process is generally a process from sending, by a terminal device, a random access preamble (random access preamble, or preamble for short) to start to attempt to access a network device to establishing a basic signaling connection between the terminal device and the network device.

Currently, the network device may broadcast different synchronization signal/physical broadcast channel blocks (synchronization signal/physical broadcast channel blocks, SS/PBCH blocks, or SSBs) for different communication areas, and distinguish between the synchronization signal/physical broadcast channel blocks by using SSB indexes (indexes). Generally, a maximum of six bits corresponding to an SSB index are supported, in other words, a maximum value of a quantity of available SSB indexes is 64. After receiving an SSB, the terminal device may send a random access preamble based on an uplink resource corresponding to the SSB index. The network device may determine, based on the received random access preamble and the corresponding uplink resource, an area in which the terminal device is located, and establish a connection to the terminal device.

To support wider service coverage, the network device may need to provide a network service for a larger communication area. Limited by the quantity of available SSB indexes, the network device may need to reuse a same SSB index in different communication areas.

However, after receiving the SSB, terminal devices in different communication areas may send random access preambles by using uplink resources corresponding to the same SSB index. Consequently, the network device cannot distinguish between communication areas in which the terminal devices are located, thereby affecting communication efficiency.

WO 2021/164579 A1 discusses a method and an apparatus for updating a timing offset, and is particularly applicable to an NTN network such as satellite communication. US 2018/220466 A1 discusses a random access method and a random access apparatus in a wireless communication system.

### SUMMARY

This application provides a communication method and a communication apparatus, so that a network device distinguishes between terminal devices in different communication areas based on time domain positions carrying random access preambles, to improve communication efficiency.

A first aspect of this application provides a communication method according to appended claim 1.

Based on the foregoing technical solution, after obtaining the first SSB, the terminal device sends, based on the first time domain position associated with the timing offset value, the random access preamble corresponding to the first SSB. The timing offset value is determined based on the round-trip delay between the first position in the area covered by the network device and the network device. In other words, timing offset values used by terminal devices in different communication areas may be different. Therefore, after the terminal devices in the different communication areas receive SSBs, because the time domain position carrying the random access preamble sent by the terminal device is associated with the timing offset value, the network device distinguishes between the terminal devices in the different communication areas based on the time domain position carrying the random access preamble, to improve communication efficiency.

It should be noted that, in embodiments of this application, the first time domain position may include one or more random access channel occasions (random access channel occasions, RACH occasions, or ROs), and the terminal device may select one of the one or more ROs as a time/frequency domain resource for carrying the random access preamble corresponding to the first SSB.

Optionally, the first time domain position including the one or more ROs may also be referred to as an RO window (window). In other words, the terminal device may select one RO from the RO window as the time/frequency domain resource for carrying the random access preamble corresponding to the first SSB.

The first time domain position is obtained by offsetting a first moment based on the timing offset value, and the first moment is associated with the first SSB.

This may also be expressed as that the first time domain position is located after a second moment obtained by offsetting the first moment by the timing offset value, and the first moment is associated with the first SSB.

This may also be expressed as that the first time domain position is located after a second moment obtained after the timing offset value offsets the first moment, and the first moment is associated with the first SSB.

Based on the foregoing technical solution, the time domain position carrying the random access preamble corresponding to the first SSB may be obtained based on the first moment associated with the first SSB. In other words, the time domain position is associated with the timing offset value and the first SSB. Because the timing offset values used by terminal devices in different communication areas may be different, and the terminal devices in the different communication areas may receive the first SSB at different moments, the network device may further distinguish between the terminal devices in the different communication areas based on the timing offset values and the first SSB.

In a possible implementation of the first aspect, a start moment of the first time domain position is the second moment.

Based on the foregoing technical solution, the start moment of the first time domain position carrying the random access preamble corresponding to the first SSB is the second moment, and the second moment is obtained after the timing offset value offsets the first moment. In this way, the first time domain position carrying the random access preamble sent by the terminal device and the second moment are consecutive in time domain, to shorten as much time as possible spent in a random access process.

In a possible implementation of the first aspect, the first time domain position is located in one or more pieces of time information after the second moment, and the time information includes a frame or a half-frame.

Optionally, the time information includes a symbol, a slot, a subframe, or other time information.

Based on the foregoing technical solution, the first time domain position carrying the random access preamble corresponding to the first SSB is located in the one or more pieces of time information after the second moment, so that the terminal device determines the first time domain position based on the time information. A more flexible implementation is provided.

In a possible implementation of the first aspect, the first time domain position is located in k association periodicity adjacent to the second moment, the association periodicity is a periodicity of an RO resource corresponding to an SSB set in which the first SSB is located, and k is an integer greater than 0.

Based on the foregoing technical solution, the first time domain position carrying the random access preamble corresponding to the first SSB is located in the k association periodicities adjacent to the second moment. The association periodicity is the periodicity of the RO resource corresponding to the SSB set in which the first SSB is located. In other words, when the corresponding RO resource is pre-configured in the SSB set, the terminal device may send the random access preamble on the pre-configured RO resource based on the first SSB, to improve a random access success rate.

In a possible implementation of the first aspect, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

Based on the foregoing technical solution, the first time domain position carrying the random access preamble is obtained by offsetting the first moment based on the timing offset value, and the first moment is associated with the first SSB. The terminal device may determine the first moment based on one or more of the foregoing manners.

In a possible implementation of the first aspect, the method further includes: The terminal device obtains the timing offset value.

Based on the foregoing technical solution, the terminal device may receive the timing offset value sent by the network device, so that the timing offset value used by the terminal device is determined between the network device and the terminal device and the random access preamble is obtained, to improve the random access success rate.

Optionally, the terminal device obtains the timing offset value via an indication of a relay node between the terminal device and the network device.

Optionally, the network device that sends the timing offset value to the terminal device and the network device that sends the first SSB to the terminal device may be a same network device, or may be different network devices. This is not limited herein.

Optionally, the timing offset value is pre-configured in the terminal device.

In a possible implementation of the first aspect, that the terminal device sends a random access preamble corresponding to the first SSB includes: The terminal device sends, based on first information, the random access preamble corresponding to the first SSB, where the first information includes at least one of the following:
a time length of the first time domain position;
a quantity of random access channel occasion RO resources included in the first time domain position, where the RO resource is used to carry the random access preamble; or
a quantity of SSBs corresponding to the first time domain position.

Based on the foregoing technical solution, the first time domain position may include one or more ROs. The terminal device may determine, based on the first information, the first time domain position carrying the random access preamble. The first information may include at least one of the following: the time length of the first time domain position, the quantity of ROs included in the first time domain position, or the quantity of SSBs corresponding to the first time domain position, so that the terminal device determines the first time domain position based on the first information.

In a possible implementation of the first aspect, the method further includes: The terminal device obtains the first information.

Based on the foregoing technical solution, the terminal device may receive the first information sent by the network device, so that the first information used by the terminal device is determined between the network device and the terminal device and the random access preamble is obtained, to improve the random access success rate.

Optionally, the terminal device obtains the first information via an indication of a relay node between the terminal device and the network device.

Optionally, the network device that sends the first information to the terminal device and the network device that sends the first SSB to the terminal device may be a same network device, or may be different network devices. This is not limited herein.

Optionally, the first information is pre-configured in the terminal device.

In a possible implementation of the first aspect, the first time domain position is associated with the timing offset value and second information, and the second information includes at least one of the following:
n first preset values, where n indicates an index position of the first SSB in the SSB set, and n is a natural number;
processing delay information;
positioning error information; or
ephemeris error information.

Based on the foregoing technical solution, the terminal device may determine, based on the second information, the first time domain position carrying the random access preamble. When the second information includes the n first preset values, the first time domain position is not limited by an SSB interval. When the second information includes at least one of the processing delay information, the positioning error information, and the ephemeris error information, accurate processing duration may be reserved for the terminal device, to improve the random access success rate.

In a possible implementation of the first aspect, a value of the timing offset value is related to a value of an offset Koffset value, where the Koffset value is used to determine a scheduling interval of a physical uplink shared channel (physical uplink shared channel, PUSCH) signal.

Optionally, the value of the timing offset value is the same as the value of the offset Koffset value, or the value of the timing offset value and the value of the offset Koffset value meet a specific mathematical relationship.

Based on the foregoing technical solution, the value of the timing offset value is related to the value of the offset Koffset value. In other words, the terminal device may determine the value of the timing offset value based on the value of the offset Koffset value, so that a process of determining the timing offset value may be based on related configuration information of the offset Koffset value, to reduce signaling overheads.

In a possible implementation of the first aspect, the first position includes any one of the following: a position that is within cell coverage and that is farthest from the network device, a position that is within beam coverage and that is farthest from the network device, and a position of the terminal device.

Based on the foregoing technical solution, the timing offset value is determined based on the round-trip delay between the first position in the area covered by the network device and the network device. The network device may configure a common timing offset value for a plurality of terminal devices in the coverage area. In other words, the first position is the position that is within the cell coverage and that is farthest from the network device, or the position that is within the beam coverage and that is farthest from the network device. This helps reduce the signaling overheads. Alternatively, the network device may separately configure a timing offset value for the terminal device in the coverage area. In other words, the first position is the position of the terminal device. This helps improve accuracy.

A second aspect of this application provides a communication method according to appended claim 6.

Based on the foregoing technical solution, after the network device sends the first SSB, a terminal device sends, based on the first time domain position associated with the timing offset value, the random access preamble corresponding to the first SSB, and the network device receives the random access preamble. The timing offset value is determined based on the round-trip delay between the first position in the area covered by the network device and the network device. In other words, timing offset values used by terminal devices in different communication areas may be different. Therefore, after the terminal devices in the different communication areas receive SSBs, because the time domain position carrying the random access preamble sent by the terminal device is associated with the timing offset value, the network device distinguishes between the terminal devices in the different communication areas based on the time domain position carrying the random access preamble, to improve communication efficiency.

The first time domain position is obtained by offsetting a first moment based on the timing offset value, and the first moment is associated with the first SSB.

This may also be expressed as that the first time domain position is located after a second moment obtained by offsetting the first moment by the timing offset value, and the first moment is associated with the first SSB.

This may also be expressed as that the first time domain position is located after a second moment obtained after the timing offset value offsets the first moment, and the first moment is associated with the first SSB.

Based on the foregoing technical solution, the time domain position carrying the random access preamble corresponding to the first SSB may be obtained based on the first moment associated with the first SSB. In other words, the time domain position is associated with the timing offset value and the first SSB. Because the timing offset values used by terminal devices in different communication areas may be different, and the terminal devices in the different communication areas may receive the first SSB at different moments, the network device may further distinguish between the terminal devices in the different communication areas based on the timing offset values and the first SSB.

In a possible implementation of the second aspect, a start moment of the first time domain position is the second moment.

Based on the foregoing technical solution, the start moment of the first time domain position carrying the random access preamble corresponding to the first SSB is the second moment, and the second moment is obtained after the timing offset value offsets the first moment. In this way, the first time domain position carrying the random access preamble sent by the terminal device and the second moment are consecutive in time domain, to shorten as much time as possible spent in a random access process.

In a possible implementation of the second aspect, the first time domain position is located in one or more pieces of time information after the second moment, and the time information includes a frame or a half-frame.

Optionally, the time information includes a symbol, a slot, a subframe, or other time information.

Based on the foregoing technical solution, the first time domain position carrying the random access preamble corresponding to the first SSB is located in the one or more pieces of time information after the second moment, so that the terminal device determines the first time domain position based on the time information. A more flexible implementation is provided.

In a possible implementation of the second aspect, the first time domain position is located in k association periodicities adjacent to the second moment, the association periodicity is a periodicity of an RO resource corresponding to an SSB set in which the first SSB is located, and k is an integer greater than 0.

Based on the foregoing technical solution, the first time domain position carrying the random access preamble corresponding to the first SSB is located in the k association periodicities adjacent to the second moment. The association periodicity is the periodicity of the RO resource corresponding to the SSB set in which the first SSB is located. In other words, when the corresponding RO resource is pre-configured in the SSB set, the terminal device may send the random access preamble on the pre-configured RO resource based on the first SSB, to improve a random access success rate.

In a possible implementation of the second aspect, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

Based on the foregoing technical solution, the first time domain position carrying the random access preamble is obtained by offsetting the first moment based on the timing offset value, and the first moment is associated with the first SSB. The terminal device may determine the first moment based on one or more of the foregoing manners.

In a possible implementation of the second aspect, the method further includes: The network device sends the timing offset value.

Based on the foregoing technical solution, the terminal device may receive the timing offset value sent by the network device, so that the timing offset value used by the terminal device is determined between the network device and the terminal device and the random access preamble is obtained, to improve the random access success rate.

In a possible implementation of the second aspect, that the network device obtains a random access preamble corresponding to the first SSB includes: The network device obtains, based on first information, the random access preamble corresponding to the first SSB, where the first information indicates at least one of the following:
a time length of the first time domain position;
a quantity of random access channel occasion RO resources included in the first time domain position, where the RO resource is used to carry the random access preamble; or
a quantity of SSBs corresponding to the first time domain position.

Based on the foregoing technical solution, the first time domain position may include one or more ROs. The network device may determine, based on the first information, the first time domain position carrying the random access preamble. The first information may include at least one of the following: the time length of the first time domain position, the quantity of ROs included in the first time domain position, or the quantity of SSBs corresponding to the first time domain position, so that the network device determines the first time domain position based on the first information.

In a possible implementation of the second aspect, the method further includes: The network device sends the first information.

Based on the foregoing technical solution, the terminal device may receive the first information sent by the network device, so that the first information used by the terminal device is determined between the network device and the terminal device and the random access preamble is obtained, to improve the random access success rate.

In a possible implementation of the second aspect, the first time domain position is associated with the timing offset value and second information, and the second information includes at least one of the following:
n first preset values, where n indicates an index position of the first SSB in the SSB set, and n is a natural number;
processing delay information;
positioning error information; or
ephemeris error information.

Based on the foregoing technical solution, the terminal device may determine, based on the second information, the first time domain position carrying the random access preamble. When the second information includes the n first preset values, the first time domain position is not limited by an SSB interval. When the second information includes at least one of the processing delay information, the positioning error information, and the ephemeris error information, accurate processing duration may be reserved for the terminal device, to improve the random access success rate.

In a possible implementation of the second aspect, a value of the timing offset value is related to a value of an offset Koffset value, where the Koffset value is used to determine a scheduling interval of a physical uplink shared channel PUSCH signal.

Optionally, the value of the timing offset value is the same as the value of the offset Koffset value, or the value of the timing offset value and the value of the offset Koffset value meet a specific mathematical relationship.

Based on the foregoing technical solution, the value of the timing offset value is related to the value of the offset Koffset value. In other words, the terminal device may determine the value of the timing offset value based on the value of the offset Koffset value, so that a process of determining the timing offset value may be based on related configuration information of the offset Koffset value, to reduce signaling overheads.

In a possible implementation of the second aspect, the first position includes any one of the following: a position that is within cell coverage and that is farthest from the network device, a position that is within beam coverage and that is farthest from the network device, and a position of the terminal device.

Based on the foregoing technical solution, the timing offset value is determined based on the round-trip delay between the first position in the area covered by the network device and the network device. The network device may configure a common timing offset value for a plurality of terminal devices in the coverage area. In other words, the first position is the position that is within the cell coverage and that is farthest from the network device, or the position that is within the beam coverage and that is farthest from the network device. This helps reduce the signaling overheads. Alternatively, the network device may separately configure a timing offset value for the terminal device in the coverage area. In other words, the first position is the position of the terminal device. This helps improve accuracy.

A third aspect of this application provides a communication apparatus. The apparatus may implement the method according to any one of the first aspect or the possible implementations of the first aspect. The apparatus includes a corresponding unit or module configured to perform the foregoing method. The unit or module included in the apparatus may be implemented by software and/or hardware. For example, the apparatus may be a terminal device, or the apparatus may be a component (for example, a processor, a chip, or a chip system) in a terminal device, or the apparatus may be a logical module or software that can implement all or some functions of a terminal device.

The communication apparatus includes a processing unit and a transceiver unit.

The transceiver unit is configured to obtain a first synchronization signal block SSB.

The transceiver unit is configured to send a random access preamble corresponding to the first SSB, where the random access preamble is carried at a first time domain position, the first time domain position is associated with a timing offset value, and the timing offset value is determined based on a round-trip delay between a network device and a first position in an area covered by the network device.

In a possible implementation of the third aspect, the first time domain position is obtained by offsetting a first moment based on the timing offset value, and the first moment is associated with the first SSB.

In a possible implementation of the third aspect, the first time domain position is located after a second moment obtained by offsetting the first moment by the timing offset value.

In a possible implementation of the third aspect, the first time domain position is located after a second moment obtained after the timing offset value offsets the first moment, and the first moment is associated with the first SSB.

In a possible implementation of the third aspect, a start moment of the first time domain position is the second moment.

In a possible implementation of the third aspect, the first time domain position is located in one or more pieces of time information after the second moment, and the time information includes a frame or a half-frame.

In a possible implementation of the third aspect, the first time domain position is located in k association periodicities adjacent to the second moment, the association periodicity is a periodicity of an RO resource corresponding to an SSB set in which the first SSB is located, and k is an integer greater than 0.

In a possible implementation of the third aspect, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

In a possible implementation of the third aspect,
the transceiver unit is further configured to obtain the timing offset value.

In a possible implementation of the third aspect, that the transceiver unit is configured to send a random access preamble corresponding to the first SSB includes:
the transceiver unit is configured to send, based on first information, the random access preamble corresponding to the first SSB, where the first information includes at least one of the following:
a time length of the first time domain position;
a quantity of random access channel occasion RO resources included in the first time domain position, where the RO resource is used to carry the random access preamble; or
a quantity of SSBs corresponding to the first time domain position.

In a possible implementation of the third aspect,
the transceiver unit is further configured to obtain the first information.

In a possible implementation of the third aspect, the first time domain position is associated with the timing offset value and second information, and the second information includes at least one of the following:
n first preset values, where n indicates an index position of the first SSB in the SSB set, and n is a natural number;
processing delay information;
positioning error information; or
ephemeris error information.

In a possible implementation of the third aspect, a value of the timing offset value is related to a value of an offset Koffset value, where the Koffset value is used to determine a scheduling interval of a physical uplink shared channel PUSCH signal.

In a possible implementation of the third aspect, the first position includes any one of the following:
a position that is within cell coverage and that is farthest from the network device, a position that is within beam coverage and that is farthest from the network device, and a position of the terminal device.

In the third aspect of embodiments of this application, composition modules of the communication apparatus may be further configured to perform the steps performed in the possible implementations of the first aspect. For details, refer to the first aspect. Details are not described herein again.

A fourth aspect of this application provides a communication apparatus. The apparatus may implement the method according to any one of the second aspect or the possible implementations of the second aspect. The apparatus includes a corresponding unit or module configured to perform the foregoing method. The unit or module included in the apparatus may be implemented by software and/or hardware. For example, the apparatus may be a network device, or the apparatus may be a component (for example, a processor, a chip, or a chip system) in a network device, or the apparatus may be a logical module or software that can implement all or some functions of a network device.

The communication apparatus includes a transceiver unit and a processing unit.

The transceiver unit is configured to send a first synchronization signal block SSB.

The transceiver unit is configured to obtain a random access preamble corresponding to the first SSB, where the random access preamble is carried at a first time domain position, the first time domain position is associated with a timing offset value, and the timing offset value is determined based on a round-trip delay between the network device and a first position in an area covered by the network device.

In a possible implementation of the fourth aspect, the first time domain position is obtained by offsetting a first moment based on the timing offset value, and the first moment is associated with the first SSB.

In a possible implementation of the fourth aspect, the first time domain position is located after a second moment obtained by offsetting the first moment by the timing offset value.

In a possible implementation of the fourth aspect, the first time domain position is located after a second moment obtained after the timing offset value offsets the first moment, and the first moment is associated with the first SSB.

In a possible implementation of the fourth aspect, a start moment of the first time domain position is the second moment.

In a possible implementation of the fourth aspect, the first time domain position is located in one or more pieces of time information after the second moment, and the time information includes a frame or a half-frame.

In a possible implementation of the fourth aspect, the first time domain position is located in k association periodicities adjacent to the second moment, the association periodicity is a periodicity of an RO resource corresponding to an SSB set in which the first SSB is located, and k is an integer greater than 0.

In a possible implementation of the fourth aspect, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

In a possible implementation of the fourth aspect, the transceiver unit is further configured to send the timing offset value.

In a possible implementation of the fourth aspect, that the transceiver unit is configured to obtain a random access preamble corresponding to the first SSB includes:
the transceiver unit is configured to obtain, based on first information, the random access preamble corresponding to the first SSB, where the first information indicates at least one of the following:
a time length of the first time domain position;
a quantity of random access channel occasion RO resources included in the first time domain position, where the RO resource is used to carry the random access preamble; or
a quantity of SSBs corresponding to the first time domain position.

In a possible implementation of the fourth aspect, the transceiver unit is further configured to send the first information.

In a possible implementation of the fourth aspect, the first time domain position is associated with the timing offset value and second information, and the second information includes at least one of the following:
n first preset values, where n indicates an index position of the first SSB in the SSB set, and n is a natural number;
processing delay information;
positioning error information; or
ephemeris error information.

In a possible implementation of the fourth aspect, a value of the timing offset value is related to a value of an offset Koffset value, where the Koffset value is used to determine a scheduling interval of a physical uplink shared channel PUSCH signal.

In a possible implementation of the fourth aspect, the first position includes any one of the following:
a position that is within cell coverage and that is farthest from the network device, a position that is within beam coverage and that is farthest from the network device, and a position of the terminal device.

In the fourth aspect of embodiments of this application, composition modules of the communication apparatus may be further configured to perform the steps performed in the possible implementations of the second aspect. For details, refer to the second aspect. Details are not described herein again.

A fifth aspect of embodiments of this application provides a communication apparatus, including at least one processor, where the at least one processor is coupled to a memory.

The memory is configured to store a program or instructions.

The at least one processor is configured to execute the program or the instructions, to enable the apparatus to implement the method according to any one of the first aspect or the possible implementations of the first aspect, or enable the apparatus to implement the method according to any one of the second aspect or the possible implementations of the second aspect.

A sixth aspect of embodiments of this application provides a communication apparatus, including at least one logic circuit and an input/output interface.

The input/output interface is configured to output a target signal.

The logic circuit is configured to perform the method according to any one of the first aspect or the possible implementations of the first aspect.

A seventh aspect of embodiments of this application provides a communication apparatus, including at least one logic circuit and an input/output interface.

The input/output interface is configured to input a target signal.

The logic circuit is configured to perform the method according to any one of the second aspect or the possible implementations of the second aspect.

An eighth aspect of embodiments of this application provides a computer-readable storage medium storing one or more computer-executable instructions. When the computer-executable instructions are executed by a processor, the processor performs the method according to any one of the first aspect or the possible implementations of the first aspect.

A ninth aspect of embodiments of this application provides a computer-readable storage medium storing one or more computer-executable instructions. When the computer-executable instructions are executed by a processor, the processor performs the method according to any one of the second aspect or the possible implementations of the second aspect.

A tenth aspect of embodiments of this application provides a computer program product (or referred to as a computer program) storing one or more computers. When the computer program product is executed by a processor, the processor performs the method according to any one of the first aspect or the possible implementations of the first aspect.

An eleventh aspect of embodiments of this application provides a computer program product storing one or more computers. When the computer program product is executed by a processor, the processor performs the method according to any one of the second aspect or the possible implementations of the second aspect.

A twelfth aspect of embodiments of this application provides a chip system. The chip system includes at least one processor, configured to support a communication apparatus in implementing the function in any one of the first aspect or the possible implementations of the first aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A thirteenth aspect of embodiments of this application provides a chip system. The chip system includes at least one processor, configured to support a communication apparatus in implementing the function in any one of the second aspect or the possible implementations of the second aspect.

In a possible design, the chip system may further include a memory. The memory is configured to store program instructions and data that are necessary for the second communication apparatus. The chip system may include a chip, or may include a chip and another discrete component. Optionally, the chip system further includes an interface circuit, and the interface circuit provides program instructions and/or data for the at least one processor.

A fourteenth aspect of embodiments of this application provides a communication system. The communication system includes the communication apparatus according to the third aspect and the communication apparatus according to the fourth aspect, and/or the communication system includes the communication apparatus according to the fifth aspect, and/or the communication system includes the communication apparatus according to the sixth aspect and the communication apparatus according to the seventh aspect.

For the technical effects brought by any one of the design manners of the third aspect to the fourteenth aspect, refer to the technical effects brought by different design manners of the first aspect or the second aspect. Details are not described herein again.

It can be learned from the foregoing technical solutions that, after the terminal devices in the different communication areas receive SSBs, because the time domain position carrying the random access preamble sent by the terminal device is associated with the timing offset value, the network device distinguishes between the terminal devices in the different communication areas based on the time domain position carrying the random access preamble, to improve the communication efficiency.

### BRIEF DESCRIPTION OF DRAWINGS

FIG. 1a is a schematic diagram of a communication scenario according to this application;
FIG. 1b is another schematic diagram of a communication scenario according to this application;
FIG. 2 is another schematic diagram of a communication scenario according to this application;
FIG. 3 is another schematic diagram of a communication scenario according to this application;
FIG. 4 is another schematic diagram of a communication scenario according to this application;
FIG. 5 is a schematic diagram of a communication method according to this application;
FIG. 6 is another schematic diagram of a communication method according to this application;
FIG. 7 is another schematic diagram of a communication method according to this application;
FIG. 8 is another schematic diagram of a communication method according to this application;
FIG. 9 is another schematic diagram of a communication method according to this application;
FIG. 10 is another schematic diagram of a communication method according to this application;
FIG. 11 is another schematic diagram of a communication method according to this application;
FIG. 12 is another schematic diagram of a communication method according to this application;
FIG. 13 is another schematic diagram of a communication method according to this application;
FIG. 14 is a schematic diagram of a communication apparatus according to this application;
FIG. 15 is another schematic diagram of a communication apparatus according to this application;
FIG. 16 is another schematic diagram of a communication apparatus according to this application; and
FIG. 17 is another schematic diagram of a communication apparatus according to this application.

### DESCRIPTION OF EMBODIMENTS

The following describes the technical solutions in embodiments of this application with reference to the accompanying drawings in embodiments of this application.

First, some terms in embodiments of this application are explained and described, to facilitate understanding of a person skilled in the art.
(1) A terminal device may be a wireless terminal device that can receive scheduling and indication information of a network device. The wireless terminal device may be a device that provides voice and/or data connectivity for a user, a handheld device with a wireless connection function, or another processing device connected to a wireless modem.
   The terminal device may communicate with one or more core networks or the internet through a radio access network (radio access network, RAN). The terminal device may be a mobile terminal device, for example, a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device, for example, a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), or a mobile terminal (mobile terminal, MT). The terminal device may alternatively be a wearable device and a terminal device in a next generation communication system, for example, a terminal device in a 5G communication system or a terminal device in a future evolved public land mobile network (public land mobile network, PLMN).
(2) A network device may be a device in a wireless network, for example, may be a radio access network (radio access network, RAN) node (or device), or may be referred to as a base station, through which a terminal device accesses the wireless network. Currently, some examples of the RAN device are: a next-generation NodeB (next-generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that the network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

(3) Configuration and pre-configuration: In this application, both the configuration and the pre-configuration are used. The configuration means that a network device sends configuration information of some parameters or parameter values to a terminal device by using a message or signaling, so that the terminal device determines a communication parameter or a transmission resource based on the values or the information. Similar to the configuration, the pre-configuration may be parameter information or a parameter value negotiated by the network device and the terminal device in advance, or may be parameter information or a parameter value that is used by the network device or the terminal device and that is specified in a standard protocol, or may be parameter information or a parameter value that is pre-stored in the network device or the terminal device. This is not limited in this application.

Further, these values and parameters may be changed or updated.

(4) Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or an NR vehicle to everything (NR vehicle to everything, NR V2X) system; and may alternatively be applied to a system of LTE and 5G hybrid networking; or a device-to-device (device-to-device, D2D) communication system, a machine-to-machine (machine to machine, M2M) communication system, an internet of things (Internet of Things, IoT), or an unmanned aerial vehicle communication system; or a communication system that supports a plurality of wireless technologies, for example, an LTE technology and an NR technology; or a non-terrestrial communication system, for example, a satellite communication system or a high-altitude communication platform. In addition, optionally, the communication system may also be applicable to a narrow band-internet of things (narrow band-internet of things, NB-IoT) system, an enhanced data rate for GSM evolution (enhanced data rate for GSM evolution, EDGE) system, and a wideband code division multiple access (wideband code division multiple access, WCDMA) system, a code division multiple access 2000 (code division multiple access, CDMA 2000) system, a time division-synchronization code division multiple access (time division-synchronization code division multiple access, TD-SCDMA) system, and a future-oriented communication technology; or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active (active) state, or may be applied to a terminal device in a non-connected (inactive) state or an idle (idle) state.

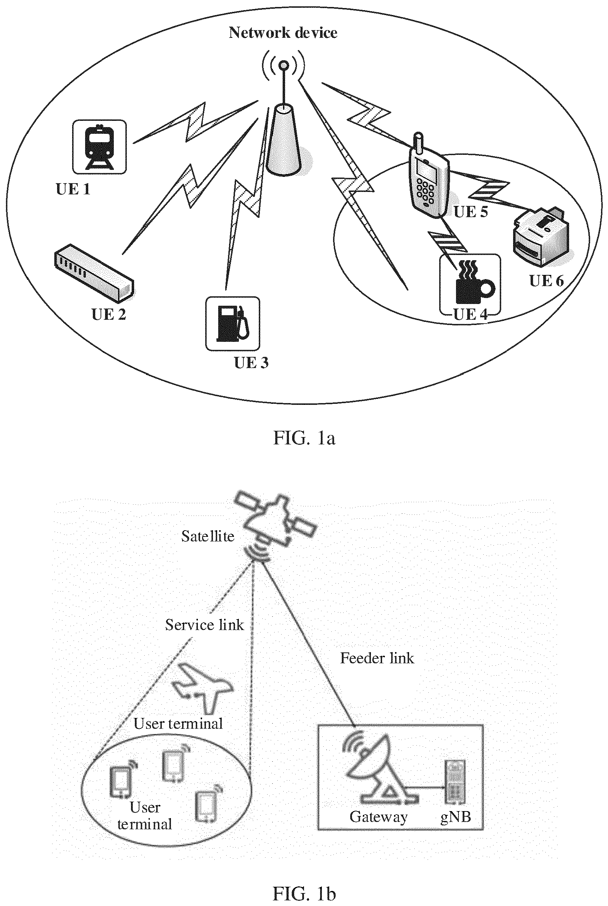

FIG. 1a is a schematic diagram of an application scenario according to an embodiment of this application. As shown in FIG. 1a, a configuration information sending entity may be a network device, and a configuration information receiving entity may be UE 1 to UE 6. In this case, a base station and the UE 1 to the UE 6 form a communication system. In the communication system, the UE 1 to the UE 6 may send uplink data to the network device. The network device needs to receive the uplink data sent by the UE 1 to the UE 6. In addition, the network device may send configuration information to the UE 1 to the UE 6.

As shown in FIG. 1a, in a communication process, a sending device (or referred to as a transmit end or a transmitter device) may be the network device, and a receiving device (or referred to as a receive end or a receiver device) may be a terminal device. Alternatively, a sending device may be a terminal device, and a receiving device may be the network device. Alternatively, both a sending device and a receiving device may be the network devices. Alternatively, both a sending device and a receiving device may be terminal devices.

FIG. 1b is a schematic diagram of another application scenario according to an embodiment of this application. The communication scenario shown in FIG. 1b may be referred to as a satellite communication scenario. In this scenario, a network device includes a satellite device and a gateway (gateway). A terminal device includes an internet of things terminal, or may be a terminal of another form and performance, for example, a mobile phone mobile terminal or a high-altitude aircraft. This is not limited herein. A link between a satellite and the terminal device is referred to as a service link (service link), and a link between the satellite and the gateway is referred to as a feeder link (feeder link). The solutions of this application may also be applied to a multi-satellite communication scenario obtained by extending the communication scenario shown in FIG. 1b.

Optionally, the satellite device may be classified into a transparent (transparent) mode and a regenerative (regenerative) mode based on a working mode. When the satellite works in the transparent mode, the satellite has a relay and forwarding function. The gateway has functions of a base station or some functions of the base station. In this case, the gateway may be considered as the base station.

Optionally, when the satellite works in the regenerative mode, the satellite has a data processing capability and functions of a base station or some functions of the base station. In this case, the satellite may be considered as the base station.

It should be noted that the technical solutions in embodiments of this application are applicable to a communication system that integrates terrestrial communication and satellite communication. The communication system may also be referred to as a non-terrestrial network (non-terrestrial network, NTN) communication system. A terrestrial communication system may be, for example, a long term evolution (long term evolution, LTE) system, a universal mobile telecommunications system (universal mobile telecommunications system, UMTS), a 5G communication system or a new radio (new radio, NR) system, or a communication system developed in a next step of the 5G communication system. This is not limited herein.

In comparison with a conventional mobile communication system, the satellite communication has advantages such as wider coverage, support for asymmetric transmission links, irrelevance of communication costs to a transmission distance, and abilities to overcome natural geographical obstacles, for example, oceans, deserts, and mountains. To overcome shortcomings of a conventional communication network, the satellite communication may be used as an effective supplement to the conventional network.

It is generally considered that, in comparison with the terrestrial communication, non-terrestrial network (non-terrestrial network, NTN) communication has different channel features, such as a high transmission delay and a large Doppler frequency shift. For example, a round-trip delay of GEO satellite communication is 238 to 270 milliseconds (ms). Around-trip delay of LEO satellite communication is 8 ms to 20 ms. Based on different orbital altitudes, satellite communication systems may be classified into the following three types: a high earth orbit satellite communication system, also referred to as a geostationary earth orbit (geostationary earth orbit, GEO) satellite communication system, a medium earth orbit (medium earth orbit, MEO) satellite communication system, and a low earth orbit (low earth orbit, LEO) satellite communication system.

A GEO satellite is also referred to as a geostationary orbit satellite, and the orbital altitude may be 35,786 km (km). A main advantage of the GEO satellite is that the GEO satellite is geostationary and provides a large coverage area. However, the GEO satellite has the following disadvantages: If the GEO satellite is at an extremely long distance from the earth, a large-diameter antenna is needed. A transmission delay is high, and is about 0.5s, and cannot meet a real-time service requirement. In addition, the GEO satellite has limited orbit resources and high launch costs, and cannot cover the polar regions. An MEO satellite has an orbital altitude of 2,000 km to 35,786 km, and a small quantity of satellites may implement global coverage. However, the MEO satellite has a higher transmission delay than a LEO satellite and is mainly used for positioning and navigation. In addition, a satellite with an orbital altitude of 300 km to 2,000 km is referred to as the low earth orbit (LEO) satellite. In comparison with the MEO satellite and the GEO satellite, the LEO satellite has a lower orbital altitude, a lower data transmission delay, less power loss, and lower launch costs. Therefore, a LEO satellite communication network has made great progress and has been in the spotlight in recent years.

The foregoing content describes a plurality of wireless communication scenarios in this application. It should be understood that the foregoing content is merely examples of scenarios to which this application may be applied. This application may be further applied to another application scenario. This is not limited herein. The following describes a random access process of wireless communication in this application.

In a wireless communication process, a connection may be established between the network device and the terminal device through the random access process. The random access process may also be referred to as an initial access process, and is generally a process from sending, by a terminal device, a random access preamble to start to attempt to access the network device to establishing a basic signaling connection between the terminal device and the network device.

Currently, the network device may broadcast different synchronization signal/physical broadcast channel blocks (synchronization signal/PBCH blocks, SS/PBCH blocks, or SSBs) for different communication areas, and distinguish between the synchronization signal/physical broadcast channel blocks by using SSB indexes. After receiving an SSB, the terminal device may send the random access preamble based on an uplink resource corresponding to the SSB index. The network device may determine, based on the received random access preamble and the corresponding uplink resource, an area in which the terminal device is located, and establish a connection to the terminal device.

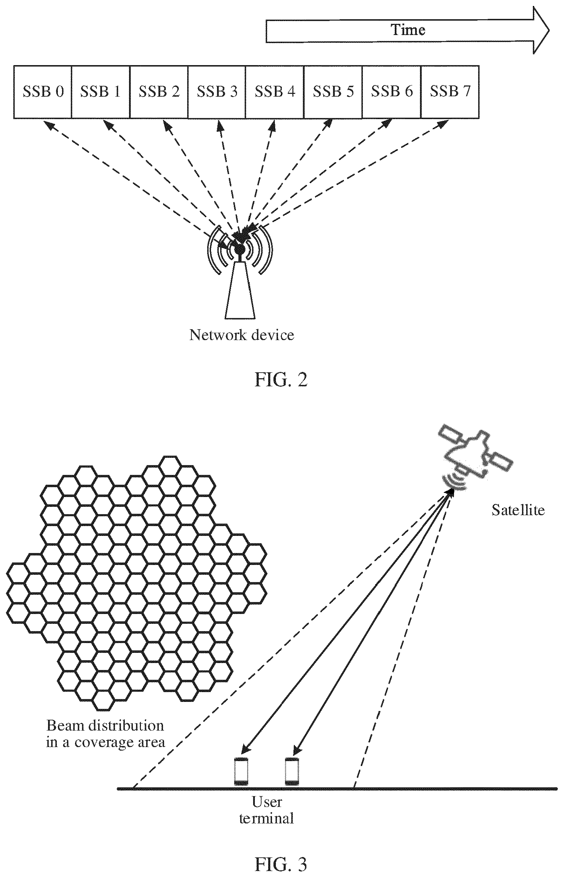

Specifically, the network device broadcasts the SSB in a beam sweeping manner. The terminal device sends, based on the received SSB index, the random access preamble on the uplink resource corresponding to the SSB, and may notify, in this manner, the network device of a beam (beam) selected by the terminal device or in which the terminal device is located. For example, as shown in FIG. 2, different dashed arrow directions indicate different beam directions. The network device may broadcast different SSBs in each beam in a time division manner, and different SSBs carry different SSB indexes. In FIG. 2, an example in which there are eight SSB indexes, including an SSB 0, an SSB 1, ..., and an SSB 7, is used for description. After detecting (or receiving) the SSB, the terminal device sends the random access preamble based on the SSB index corresponding to the SSB by using a corresponding uplink time-frequency resource, to request to access a network. The network device determines, based on the random access preamble sent by the terminal device and the time-frequency resource on which the random access preamble is located, the beam in which the terminal device is located, to establish an initial beam pair link.

It should be understood that different beams may be distinguished in a protocol based on a bandwidth part (bandwidth part, BWP), a transmission configuration indicator (transmission configuration indicator, TCI), or a synchronization signal block (synchronization signal block, SSB), or in other words, a beam may be indicated based on a BWP, a TCI, or an SSB. For example, for the terminal device and the network device, switching between beams may be indicated through switching between BWPs, TCIs, or SSBs. Therefore, for the terminal and/or the network device, what is actually performed may be the switching between the BWPs, TCIs, or SSBs. In addition, the beam described in this application may also be replaced with a BWP, a TCI, or an SSB.

To support wider service coverage, the network device may need to provide a network service for a larger communication area. An NTN is used as an example. In the NTN communication system, each satellite/high-altitude platform/base station can generally cover a large area. To improve a link budget, the satellite performs narrow beamforming to transmit energy in a centralized manner, so that communication quality of UE in a coverage area may be improved. Therefore, a large quantity of beam positions are needed in a coverage area of a single satellite to complete full coverage.

For example, if an orbital altitude is 1,150 km and a coverage diameter of a single beam is about 26 km, the coverage area of the satellite needs to cover about 700 beam positions. For example, a cellular hexagon in FIG. 3 is used as an example. Each hexagon may represent coverage of one beam, and a set of a plurality of hexagons may be considered as a coverage area of the satellite. In an initial access phase, the satellite, as a network device, needs to sequentially scan all beams, and configure a random access resource for the terminal device. This also increases time spent in beam scanning.

Optionally, in FIG. 3, the hexagon is used as an example of the coverage of the beam. In actual application, the coverage of the beam may alternatively be represented by a rectangle, a circle, or another regular shape, or an irregular shape. This is not limited in this application.

Optionally, one beam position may represent coverage of one beam.

In a current communication system, a quantity of synchronization broadcast blocks that may be used is related to a used carrier frequency, for example:
(1) When the carrier frequency is lower than 3 GHz (GHz), a maximum of four SSBs with different SSB indexes are supported in one cell.
(2) When the carrier frequency is higher than 3 GHz and lower than 6 GHz, a maximum of eight SSBs with different SSB indexes are supported in one cell.
(3) When the carrier frequency is higher than 6 GHz, a maximum of 64 SSBs with different SSB indexes are supported in one cell.

In conclusion, a maximum quantity of available synchronization broadcast blocks is summarized in Table 1. It can be seen that when the carrier frequency is greater than 6 GHz, the maximum quantity of available synchronization broadcast blocks is 64. In an NTN scenario, one satellite can support more than 64 beams. Therefore, a situation in which a quantity of SSBs is insufficient may occur.

**Table 1**

| **Subcarrier spacing (unit: kHz)** | **Carrier frequency (denoted as f)** | **Quantity of SSBs** |
|---|---|---|
| 15 | f < 3 GHz | 4 |
| 15 | 3 GHz < f < 6 GHz | 8 |
| 30 | f < 3 GHz | 4 |
| 30 | 3 GHz < f <6 GHz | 8 |
| 120 | f > 6 GHz | 64 |
| 240 | f > 6 GHz | 64 |

For example, the carrier frequency is higher than 6 GHz. The maximum quantity of available SSBs is 64. The satellite is used as the network device in the communication system. If there are 350 beam positions in the coverage area of the satellite, 350 beams are needed to complete full coverage. Division into six cells is needed so that a quantity of SSBs in each cell does not need to be greater than 64. In this case, after the satellite moves, the terminal device in the coverage area of the satellite experiences cell switching a plurality of times. If the 350 beam positions can be mapped to one cell, the cell switching is not performed for the terminal device in the coverage area of the satellite. In other words, in a large-scale beam scenario, if a system supports mapping of a large quantity of beams to one cell, in other words, coverage of the cell is increased, a cell switching frequency in a coverage area of a single satellite is greatly reduced.

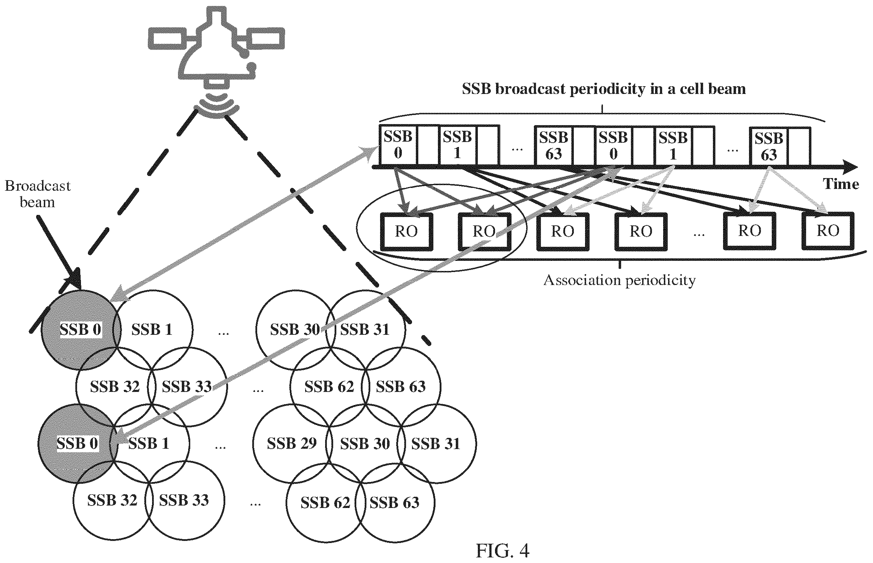

In an implementation example, as shown in FIG. 4, SSBs whose SSB indexes are 0 to 63 in a cell beam may be considered as an SSB broadcast periodicity. One broadcast periodicity corresponds to one or more association periodicities (only one association periodicity is shown in the figure, and in this example, each SSB index corresponds to two RO resources in one association periodicity). After receiving an SSB, the terminal device may determine a corresponding RO resource in the association periodicity based on the SSB, and send a random access preamble based on the RO resource. In addition, if a quantity of beams in a cell is greater than 64, the SSBs whose SSB indexes are 0 to 63 may need to be repeatedly used. In this case, terminal devices in beams corresponding to a same SSB index may use a same RO resource. As shown in FIG. 4, if an SSB received by a terminal device (denoted as the 1^{st} terminal device) is an SSB 0 to which an "arrow a" points, and an SSB received by another terminal device (denoted as the 2^{nd} terminal device) is an SSB 0 to which an "arrow b" points, the two terminal devices send random access preambles by using a same uplink resource. For the network device, after receiving the random access preambles sent by the two terminal devices, the network device only learns that the two terminal devices are in communication areas corresponding to the "SSB 0". However, in a scenario shown in FIG. 4, because there are a plurality of communication areas corresponding to the "SSB 0", the network device cannot distinguish between the first terminal device and the second terminal device that are in the communication areas corresponding to the "SSB 0".

Similarly, in a terrestrial communication system, when a network device needs to provide a network service for a larger communication area, a situation in which a same SSB index is repeatedly used may also occur. Consequently, the network device cannot distinguish between terminal devices in different communication areas.

To resolve the foregoing problem, this application provides a communication method and apparatus, so that a network device distinguishes between terminal devices in different communication areas based on time domain positions carrying random access preambles, to improve communication efficiency. The following provides further descriptions with reference to the accompanying drawings.

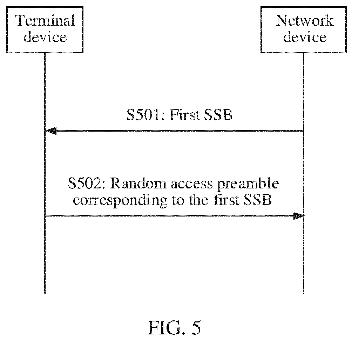

FIG. 5 is a schematic diagram of a communication method according to this application. The method includes the following steps.

S501: A terminal device obtains a first SSB.

In this embodiment, a network device sends the first SSB in step S501, and correspondingly, the terminal device receives the first SSB in step S501.

Optionally, in step S501, the terminal device receives the first SSB by using a relay node between the terminal device and the network device.

It should be noted that when the network device sends a plurality of SSBs with different SSB indexes, sending length of each SSB index may be denoted as an SSB window corresponding to the SSB index, and the network device may send, in the SSB window, one or more SSBs with a same SSB index. In other words, the network device may send one or more same SSBs for each SSB index. For example, when a quantity of SSB indexes that can be sent by the network device is 64, the network device may send one or more SSBs whose indexes are "SSB 0", and then send one or more SSBs whose indexes are "SSB 1". By analogy, the network device sends one or more SSBs whose indexes are "SSB 63".

Optionally, when the network device sends a plurality of same SSBs corresponding to an SSB index, the plurality of same SSBs corresponding to the SSB index may be referred to as an SSB group.

Optionally, when the quantity of SSB indexes that can be sent by the network device is 64, the network device sequentially sends the SSB whose index is "SSB 0", the SSB whose index is "SSB 1", ..., and the SSB whose index is "SSB 63", and then the network device may send again the SSB whose index is "SSB 0", the SSB whose index is "SSB 1", ..., and the SSB whose index is "SSB 63". A complete process in which the network device sends "the SSB whose index is 'SSB 0', the SSB whose index is 'SSB 1', ..., and the SSB whose index is 'SSB 63'" may be referred to as an SSB set/periodicity.

S502: The terminal device sends a random access preamble corresponding to the first SSB.

In this embodiment, the terminal device sends, in step S502, the random access preamble corresponding to the first SSB, and correspondingly, the network device receives, in step S502, the random access preamble corresponding to the first SSB. The random access preamble is carried at a first time domain position, where the first time domain position is associated with a timing offset value, and the timing offset value is determined based on a round-trip delay between the network device and a first position in an area covered by the network device.

Optionally, in step S502, the network device receives, by using the relay node between the terminal device and the network device, the random access preamble corresponding to the first SSB.

It should be noted that, in embodiments of this application, the first time domain position may include one or more random access channel occasions (random access channel occasions, RACH occasions, or ROs), and the terminal device may select one of the one or more ROs as a time/frequency domain resource for carrying the random access preamble corresponding to the first SSB.

Optionally, the first time domain position including the one or more ROs may also be referred to as an RO window (window). In other words, the terminal device may select one RO from the RO window as the time domain resource for carrying the random access preamble corresponding to the first SSB.

In a possible implementation, the first time domain position is obtained by offsetting a first moment based on the timing offset value, and the first moment is associated with the first SSB.

Optionally, this implementation may also be expressed as that the first time domain position is located after a second moment obtained by offsetting the first moment by the timing offset value, and the first moment is associated with the first SSB.

Optionally, this implementation may also be expressed as that the first time domain position is located after a second moment obtained after the timing offset value offsets the first moment, and the first moment is associated with the first SSB.

Specifically, the time domain position carrying the random access preamble corresponding to the first SSB may be obtained based on the first moment associated with the first SSB. In other words, the time domain position is associated with the timing offset value and the first SSB. Because the timing offset values used by terminal devices in different communication areas may be different, and the terminal devices in the different communication areas may receive the first SSB at different moments, the network device may further distinguish between the terminal devices in the different communication areas based on the timing offset values and the first SSB. For example, the terminal devices in the different areas use different random access resources. Therefore, the network device may distinguish between the terminal devices in the different areas.

In a possible implementation, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

Specifically, the first time domain position carrying the random access preamble is obtained by offsetting the first moment based on the timing offset value, and the first moment is associated with the first SSB. The terminal device may determine the first moment based on one or more of the foregoing manners.

In a possible implementation, there may be a plurality of association relationships between the first time domain position carrying the random access preamble and the second moment. The following provides descriptions through a plurality of implementations.

Implementation 1: A start moment of the first time domain position is the second moment.

Specifically, the start moment of the first time domain position carrying the random access preamble corresponding to the first SSB is the second moment, and the second moment is obtained after the timing offset value offsets the first moment. In this way, the first time domain position carrying the random access preamble sent by the terminal device and the second moment are consecutive in time domain, to shorten as much time as possible spent in a random access process.

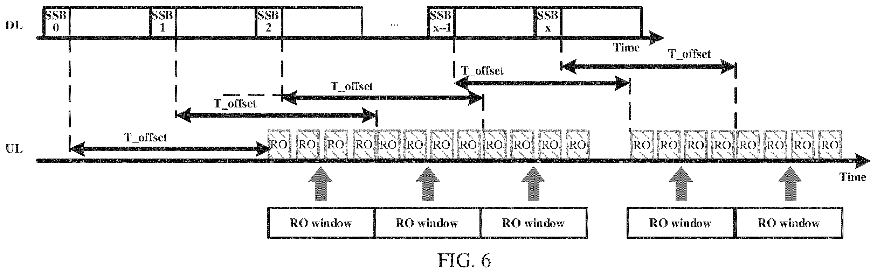

For example, an implementation process shown in FIG. 6 is used as an example. The network device broadcasts SSBs whose SSB indexes are 0 to x (where x is an integer greater than 2). After receiving an SSB, the terminal device may determine a range of an RO window based on a time domain position of the SSB and a timing offset value (denoted as T_offset), and send a random access preamble in the RO window.

Optionally, in an example shown in FIG. 6, an example in which the first moment is an end moment of the first SSB is used for description.

Optionally, in FIG. 6, an example in which each RO window includes four RO resources is used for description. A quantity of RO resources included in each RO window may alternatively be another value, for example, 1, 2, 3, or another value. This is not limited in this application.

An example in which the terminal device receives an SSB whose index is SSB 0 is used. The terminal device may offset backward an end moment of the SSB 0 by a time length of T_offset, to determine a start of the RO window. The terminal device may select any one of the four RO resources included in the RO window corresponding to these SSBs 0 to send the random access preamble.

Optionally, a specific time domain resource (position) of the RO in an RO window length may be pre-configured in the terminal device. For example, an implementation example of time domain resource configuration of the RO is shown in Table 2.

**Table 2**

| PRACH configuration index ${N}_{t}^{RA , slot}$ | Preamble format | *n*_{SFN} mod *x* = *y* | | Subframe number | Starting symbol ***l*₀** | Number of PRACH slots within a subframe ${n}_{slot}^{RA}$ | , number of time domain | ${N}_{dur}^{RA}$ , PRACH duration |
|---|---|---|---|---|---|---|---|---|
| | | *x* | *y* | | | | | |
| | Preamble format | | | Subframe number | | | | |
| Random access configuration index | | | | | Starting | | | |
| | | | | | symbol | | | Quantity of symbols occupied by random access time domain resources |
| | | | | | | | PRACH occasions within a PRACH slot | |
| | | | | | | Quantity of random access slots included in a subframe | | |
| | | | | | | | Quantity of time domain ROs included in a random access slot | |
| 0 | ... | 1 | 0 | 0, 1, 2, 3, 4, 5, 6, 7, 8, 9 | 0 | 8 | 14 | 1 |
| 1 | ... | 1 | 0 | 0, 1, 2, 3, 4, 5, 6, 7, 8, 9 | 0 | 8 | 7 | 2 |

Parameters in Table 2 are defined as follows:
An orthogonal frequency division multiplexing (orthogonal frequency division multiplexing, OFDM) symbol of the RO in the RO window is $l = {l}_{0} + {n}_{t}^{RA} {N}_{dur}^{RA} + 14 {n}_{slot}^{RA}$.
*l*₀ is a position of the starting symbol of the RO.
${n}_{t}^{RA , slot}$ indicates a quantity of ROs in the physical random access channel slot (PRACH slot).
${N}_{dur}^{RA}$ indicates a quantity of symbols (symbols) occupied by one RO.
${n}_{slot}^{RA}$ indicates a quantity of PRACH slots in a subframe (subframe).

It should be noted that a specific implementation of the parameter "Preamble format preamble format" in Table 2 (and Table 3 and Table 4 below) is not limited in this application. For example, a value of the parameter may be a pre-configured (or protocol-defined, or pre-stored) preamble format whose index is "A", where A is a natural number. For ease of description, in this application, "..." is used as an example to represent a name of the preamble format.

NR signaling configuration may still be used for frequency domain RO configuration. A higher-layer parameter message 1-frequency division multiplexing (msg1-FDM) indicates 1/2/4/8. NR determines a frequency domain resource position by configuring a position relative to an edge of an initial uplink BWP. An SSB per RO and contention-based preamble per SSB (ssb-perRACH-OccasionAndCB-PreamblesPerSSB) parameter is configured on a network side. The terminal device may use the contention-based preamble per SSB (CB-PreamblesPerSSB) parameter to determine a quantity of used random access preambles. The SSB per RO (ssb-perRACH-Occasion) parameter may not be transferred or may not be used by the terminal device.

Implementation 2: The first time domain position is located in one or more pieces of time information after the second moment, and the time information includes a frame or a half-frame.

Specifically, the first time domain position carrying the random access preamble corresponding to the first SSB is located in the one or more pieces of time information after the second moment, so that the terminal device determines the first time domain position based on the time information. A more flexible implementation is provided.

Optionally, the time information includes a symbol, a slot, a subframe, or other time information.

Optionally, in the implementation 2, an example in which the time information is the half-frame is used. To be specific, the half-frame is the 1^{st} uplink half-frame obtained after the terminal device offsets an end moment of an SSB window (or a broadcast beam window) by a time length of a timing offset parameter (denoted as T_offset).

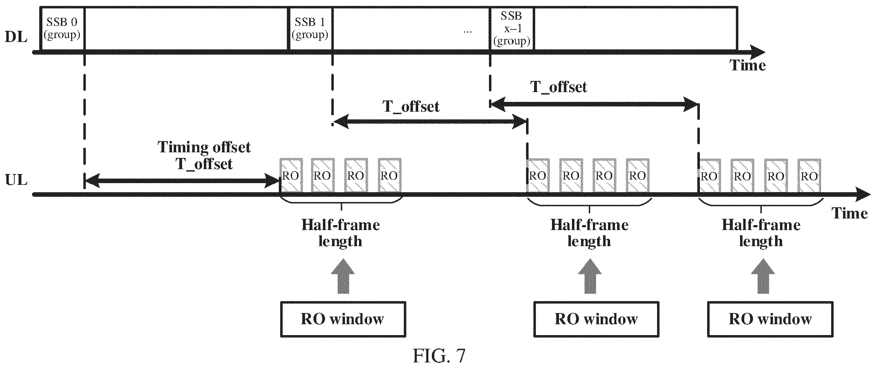

As shown in FIG. 7, an example in which the terminal device receives the SSB whose index is SSB 0 is still used herein. After receiving the SSB 0 (group), the terminal device offsets an end moment of a time window in which the SSB 0 is located by the length of the timing offset parameter, to obtain the second moment, and then the terminal device determines one or more uplink half-frame lengths aligned with the end moment as the RO window.

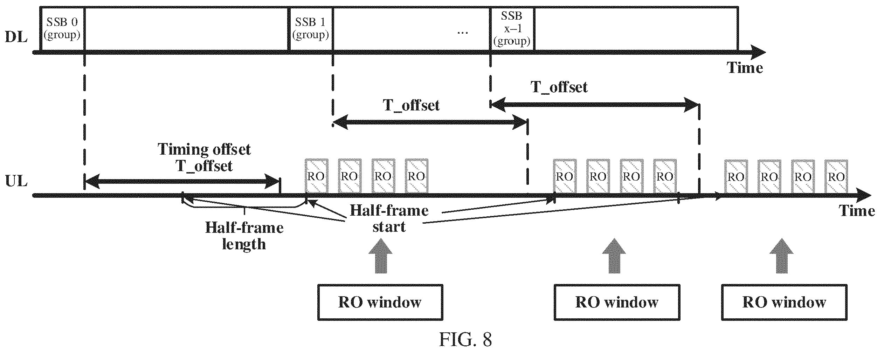

As shown in FIG. 8, a difference from FIG. 7 lies in that a start moment of the RO window does not need to be aligned with half-frame timing, to improve flexibility of implementing the solution.

Optionally, in examples shown in FIG. 7 and FIG. 8, an example in which the first moment is the end moment of the first SSB is used for description.

Optionally, for an implementation process of the specific time domain resource (position) of the RO in the RO window length, Table 2 may be adaptively modified to obtain another implementation of the specific time domain resource (position) of the RO in the RO window length. For details, refer to descriptions in Table 3 and Table 4.

**Table 3**

| PRACH configuration index ${N}_{t}^{RA , slot}$ ${N}_{dur}^{RA}$ | Preamble format | Subframe sequence number in the corresponding half-frame | Starting symbol | Number of PRACH slots within a subframe | , number of time domain PRACH occasions within a PRACH slot | , PRACH duration |
|---|---|---|---|---|---|---|
| | | Subframe including a random access resource in a half-frame | | | | |
| 0 | ... | 0 | 0 | 1 | 2 | 2 |
| 1 | ... | 0,1 | 0 | 1 | 4 | 2 |
| 2 | ... | 0, 1, 2 | 0 | 1 | 2 | 2 |
| 3 | ... | 0, 1, 2, 3 | 0 | 1 | 2 | 2 |
| 4 | ... | 0, 1, 2, 3, 4 | 0 | 1 | 2 | 2 |
| ... | ... | Subset ∈{0, 1, 2, 3, 4} | 0 | ∈{1, 2} | ∈{1 to 14} | ∈{1 to 14} |
| ... | ... | Subset ∈{0, 1, 2, 3, 4} | 0 | ∈{1 to 8} | ∈{1 to 14} | ∈{1 to 14} |

Optionally, it is assumed that each broadcast beam scans all beam positions (for example, 700 or 360 beam positions) in a coverage area of a satellite. A receive beam of the broadcast beam radiates each beam position for 5 ms. If the beam position is radiated for another time length, a parameter related to the subframe number (Subframe number) in the foregoing table needs to be modified accordingly. For example, the name of the subframe including a random access resource in a half-frame (Subframe sequence number in the corresponding half-frame) may be changed to subframe sequence number corresponding to an RO window (Subframe sequence number in the corresponding RO window).

Optionally, in Table 3, a subcarrier spacing (subcarrier spacing, SCS) corresponding to the random access preamble may have a plurality of values.

For example, when the SCS value is 15 kHz, Number of PRACH slots within a subframe = 1. When the SCS value is 30 kHz, Number of PRACH slots within a subframe = 1 or 2. When the SCS value is 60 kHz, Number of PRACH slots within a subframe = {1, 2, 3, 4}. When the SCS value is 120 kHz, Number of PRACH slots within a subframe = {1 to 8}.

Optionally, the network device may configure an RO window length for the terminal device or agree on an RO window length by using a protocol. For example, according to an agreement, the RO window length is a residence time length of a broadcast beam, and the RO window is aligned with a half-frame boundary.

Optionally, the RO window length may alternatively be another value, and may correspond to a time length (the beam residence time length) of irradiating a beam position by the broadcast beam or a time length of an SSB (group) window.

**Table 4**

| PRACH configuration index ${N}_{dur}^{RA}$ | Preamble format | *n*_{SFN} mod *x* = *y* | | Subframe number | Starting symbol | Number of PRACH slots within a subframe | ${N}_{t}^{RA , slot}$ , number of time domain PRACH occasions within a PRACH slot | , PRACH duration |
|---|---|---|---|---|---|---|---|---|
| | | *x* | *y* | | | | | |
| 0 | ... | 1 | 0 | {0}{5} | 0 | 1 | 2 | 2 |
| 1 | ... | 1 | 0 | {0, 1}{5, 6} | 0 | 1 | 4 | 2 |
| 2 | ... | 1 | 0 | {0, 1, 2}{5, 6, 7} | 0 | 1 | 2 | 2 |
| 3 | ... | 1 | 0 | {0, 1, 2, 4}{5, 6, 7, 8} | 0 | 1 | 2 | 2 |
| 4 | ... | 1 | 0 | {0, 1, 2, 3, 4}{5, 6, 7, 8, 9} | 0 | 1 | 2 | 2 |
| ... | ... | 1 | 0 | Subset E {0, 1, 2, 3, 4} | 0 | ∈{1, 2} | ∈{1 to 14} | ∈{1 to 14} |
| | | | | Subset ∈ {5, 6, 7, 8, 9} | | | | |
| ... | ... | 1 | 0 | Subset E {0, 1, 2, 3, 4} Subset ∈ {5, 6, 7, 8, 9} | 0 | ∈{1 to 8} | ∈{1 to 14} | ∈{1 to 14} |

In a subframe number option, the two sets respectively represent a subframe number of an RO in an upper half-frame and a subframe number of an RO in a lower half-frame. If the RO window length is 5 ms, the upper half-frame and the lower half-frame respectively correspond to two RO windows. Table 3 is configured based on a subframe including a random access resource in a half-frame, and Table 4 is configured based on both the upper half-frame and the lower half-frame in a frame.

Implementation 3: The first time domain position is located in k association periodicities adjacent to the second moment.

The association periodicity is a periodicity of an RO resource corresponding to an SSB set in which the first SSB is located, and k is an integer greater than 0.

Specifically, the first time domain position carrying the random access preamble corresponding to the first SSB is located in the k association periodicities adjacent to the second moment. The association periodicity is the periodicity of the RO resource corresponding to the SSB set in which the first SSB is located. In other words, when the corresponding RO resource is pre-configured in the SSB set, the terminal device may send the random access preamble on the pre-configured RO resource based on the first SSB, to improve a random access success rate.

For example, assuming that an SSB 0 to an SSB x are broadcast in a system, a minimum quantity of PRACH RO configuration periodicities that are needed when all the SSB 0 to the SSB x are mapped to ROs may be referred to as an association periodicity (association period). The association periodicity starts from a frame 0. The PRACH RO configuration periodicity may be obtained based on an RO configuration table. For example, as shown in Table 4, the RO configuration periodicity is 10 ms.

Optionally, the terminal device determines, based on the received SSB, an SSB set (a synchronization broadcast block set) in which the terminal device is located, and determines, by using a timing offset T_offset, an RO association periodicity mapped to the SSB set.

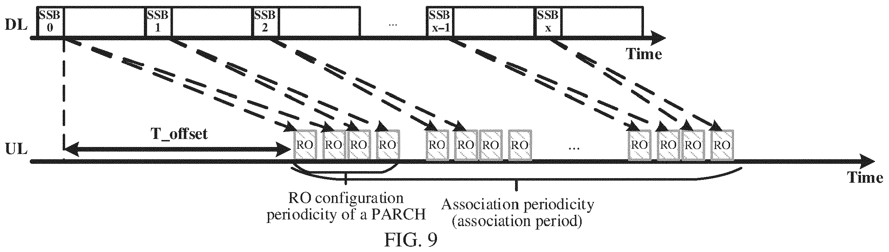

Specifically, as shown in FIG. 9, the terminal device determines, based on a received SSB index and a known SSB pattern (determined according to a protocol), a time domain position of the SSB set in which the SSB is located, determines a time domain position of the SSB 0, offsets an end or start position of the SSB 0 by a time length of the timing offset T_offset, determines a moment obtained by offsetting as a start of the RO association periodicity of the SSB set, and agrees on that the SSB 0 to the SSB x are associated with an RO in only one or y (where y is an integer greater than or equal to 1) association periodicities. The terminal device sends, in the association periodicity, the preamble by using an RO resource mapped to a detected SSB index.

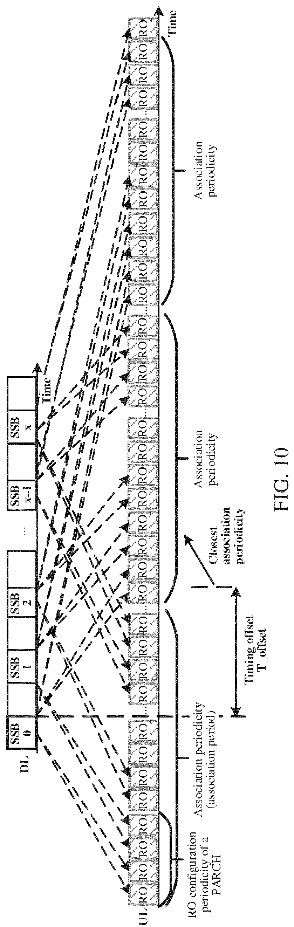

Optionally, as shown in FIG. 10, the terminal device may map the association periodicity to the SSB 0 to the SSB x from the frame 0. The terminal device determines, based on the detected SSB and the known SSB pattern (determined according to the protocol), the time domain position of the SSB set in which the SSB is located, determines the time domain position of the SSB 0, offsets the end or start position of the SSB 0 by the time length of the timing offset T_offset, and selects an RO resource in a closest RO association periodicity as an RO resource mapped to the SSB set. Alternatively, the terminal device selects an RO resource in closest y (where y is an integer greater than or equal to 1) RO association periodicities as an RO resource mapped to the SSB set. The terminal device sends, in the selected one or y association periodicities, the preamble by using the RO resource mapped to the detected SSB index.

Optionally, in examples shown in FIG. 9 and FIG. 10, an example in which the first moment is an end moment of the 1^{st} SSB in the SSB set in which the first SSB is located is used for description. For example, when an index of the first SSB is "SSB 0", the first moment is the end moment of the first SSB. When the index of the first SSB is another value, the first moment is an end moment of the second SSB. An index of the second SSB is "SSB 0".

In a possible implementation, the method further includes: The terminal device obtains the timing offset value. Specifically, the terminal device may receive the timing offset value sent by the network device, so that the timing offset value used by the terminal device is determined between the network device and the terminal device and the random access preamble is obtained, to improve the random access success rate.

Optionally, the terminal device obtains the timing offset value via an indication of a relay node between the terminal device and the network device.

Optionally, the network device that sends the timing offset value to the terminal device and the network device that sends the first SSB to the terminal device may be a same network device, or may be different network devices. This is not limited herein.

Optionally, the timing offset value is pre-configured in the terminal device.

For example, the network device may configure the timing offset value (denoted as T_offset) for the terminal device. For example, T_offset = [RTD_max/subframe_length] = 15 ms, where $\left⌈⋅\right⌉$ represents rounding up, RTD_max represents a possible maximum round-trip delay between a base station to the terminal device, and subframe_length represents a subframe length, or subframe_length may be replaced with a slot length or a symbol length. The slot length may be determined based on an uplink subcarrier width used by the terminal device, or a slot length corresponding to a subcarrier width (for example, a slot length of 1 ms corresponding to a subcarrier width of 15 kHz) may be agreed on.

Optionally, a value of the timing offset value is related to a value of an offset Koffset value, where the Koffset value is used to determine a scheduling interval of a physical uplink shared channel (physical uplink shared channel, PUSCH) signal.

Optionally, the value of the timing offset value is the same as the value of the offset Koffset value, or the value of the timing offset value and the value of the offset Koffset value meet a specific mathematical relationship.

Specifically, the value of the timing offset value is related to the value of the offset Koffset value. In other words, the terminal device may determine the value of the timing offset value based on the value of the offset Koffset value, so that a process of determining the timing offset value may be based on related configuration information of the offset Koffset value, to reduce signaling overheads.

In other words, to reduce the signaling overheads, T_offset may be set to be equal to an existing parameter value, and the parameter value is related to the maximum round-trip delay between the terminal device and the base station. For example, the network side sends a time offset Koffset value to the terminal device, to indicate a scheduling interval of an PUSCH signal. If the terminal device receives uplink grant/scheduling information in a downlink slot n, PUSCH data of the terminal device needs to be sent in an uplink slot $\left⌊n⋅\frac{{2}^{{μ}_{PUSCH}}}{{2}^{{μ}_{PDCCH}}}\right⌋ + {K}_{2} + {K}_{offset}$.

*K*₂ = 0, ...,32, and a value of K₂ is indicated by a DCI instruction. *µ_{PUSCH}* and *µ_{PDCCH}* are related to subcarrier spacings of a PUSCH and a PDCCH. To be specific, the subcarrier spacing of the PUSCH is 2^{*µ*_{PUSCH}} × 15 kHz, and the subcarrier spacing of the PDCCH is 2^{*µ*_{PDCCH}} × 15 kHz. Therefore, it may be assumed that T_offset = a Koffset value or a time length represented by T_offset is the same as a time length represented by Koffset.

In a possible implementation, that the terminal device sends a random access preamble corresponding to the first SSB includes: The terminal device sends, based on first information, the random access preamble corresponding to the first SSB, where the first information includes at least one of the following:
a time length of the first time domain position;
a quantity of random access channel occasion RO resources included in the first time domain position, where the RO resource is used to carry the random access preamble; or
a quantity of SSBs corresponding to the first time domain position.

Specifically, the first time domain position may include one or more ROs. The terminal device may determine, based on the first information, the first time domain position carrying the random access preamble. The first information may include at least one of the following: the time length of the first time domain position, the quantity of ROs included in the first time domain position, or the quantity of SSBs corresponding to the first time domain position, so that the terminal device determines the first time domain position based on the first information.

In a possible implementation, the method further includes: The terminal device obtains the first information. Specifically, the terminal device may receive the first information sent by the network device, so that the first information used by the terminal device is determined between the network device and the terminal device and the random access preamble is obtained, to improve the random access success rate.

Optionally, the terminal device obtains the first information via an indication of a relay node between the terminal device and the network device.

Optionally, the network device that sends the first information to the terminal device and the network device that sends the first SSB to the terminal device may be a same network device, or may be different network devices. This is not limited herein.

Optionally, the first information is pre-configured in the terminal device.

The following describes a plurality of implementations of the first information by using examples.

When the first information includes the time length of the first time domain position, the network device may configure an RO window length ROwindow_length for the terminal device. For example, ROwindow_length = 4 symbol_length, where symbol_length represents a symbol length, and may include a CP (cyclic prefix) length. Alternatively, the ROwindow_length may be represented in another time unit, for example, a millisecond and a slot length. For example, ROwindow _length = 1 ms.

Optionally, the terminal device offsets backward an end moment of a detected SSB by a time length indicated by T_offset, and a moment obtained by offsetting is used as a start of an RO window. The RO window ends in the time length ROwindow_length. The RO window is used as an RO window mapped to the SSB.

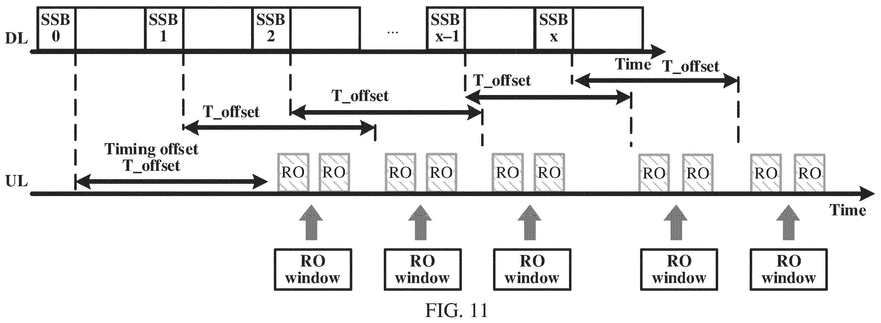

The first information includes the quantity of random access channel occasion RO resources included in the first time domain position, where the RO resource is used to carry the random access preamble. An implementation in FIG. 11 is used as an example. The network device may send an RO window parameter ROwindow _length to the terminal device to indicate the quantity of RO resources. For example, the RO window = 2 RO resources. A value of ROwindow _length may reuse the ssb-perRACH-Occasion parameter, that is, ROwindow_length = ssb-perRACH-Occasion. In this case, ssb-perRACH-Occasion is an integer greater than 0.

Optionally, the terminal device offsets backward the end moment of the detected SSB by a time length of T_offset, and selects ROwindow_length = 2 complete ROs thereafter as ROs mapped to the RO window or the SSB.

The first information includes the quantity of SSBs corresponding to the first time domain position. Specifically, a difference from the foregoing implementation processes lies in that a parameter SSBperROwindow is added to indicate that each RO window corresponds to SSBperROwindow SSBs, so that a plurality of SSBs may share a same RO window. In this case, an RO window length is not greater than a length of [SSBperROwindow × SSB launch interval] or a length [Time occupied by SSBperROwindow SSBs]. The base station sends the parameter SSBperROwindow to the terminal device. An SSBperROwindow value may reuse the ssb-perRACH-Occasion parameter, that is, SSBperROwindow = 1/ssb-perRACH-Occasion. In this case, 0 < ssb-perRACH-Occasion < 1.

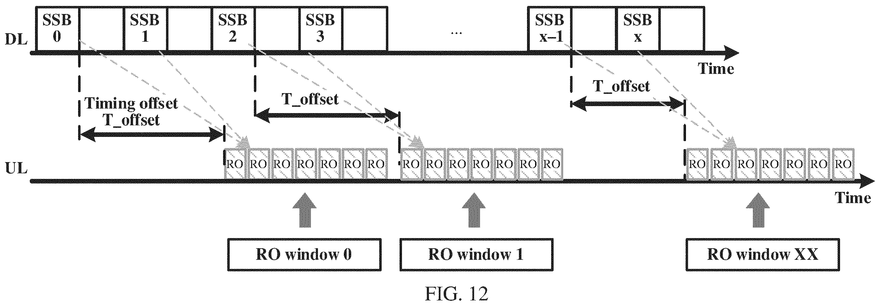

For example, the network side sends SSBperROwindow = 2 to the terminal device to indicate that each RO window corresponds to two SSBs. As shown in FIG. 12, the SSB 0/SSB 1 is mapped to an RO window 0. The RO window 0 is determined based on the end moment of the SSB 0. Similarly, an SSB 2/SSB 3 is mapped to an RO window 1. The RO window 1 is determined based on an end moment of the SSB 2. Specific steps are as follows (it is assumed that SSB indexes broadcast by the base station are 0 to 63; if the SSB index is another combination, a principle is the same):
(1) The terminal device divides 0 to 63 into 64/SSBperROwindow groups. When SSBperROwindow = 2, the terminal device divides the SSB indexes into 32 groups: {SSB 0 SSB 1}, {SSB 2 SSB 3}, {SSB 4 SSB 5}, ....
(2) After detecting an SSB index, the terminal device determines the RO window based on an end moment of the 1^{st} SSB in an SSB group in which the SSB index is located (where the terminal device determines an end position of the SSB based on an SSB pattern). The RO window is mapped to the SSB, and the terminal device selects an RO in the RO window to send the preamble.

Optionally, after detecting an SSB index, the terminal device determines the RO window based on an end moment of the last SSB in an SSB group in which the SSB index is located (where the terminal device determines an end position of the SSB based on an SSB pattern).

In this case, different preambles mapped to different SSBs are used to distinguish between beam coverage areas in which the terminal device is located. Therefore, in a scenario in which users are unevenly distributed in different beams, RO resources may be fully utilized to reduce an access collision probability and improve a detection rate.

It should be noted that in the signaling in this embodiment of this application, for example, any one of a plurality of pieces of information such as a time length (which may be denoted as ROwindow_length) of the first time domain position included in the first information, a quantity (which may be denoted as SSBperROwindow) of random access channel occasion RO resources, a quantity (which may be denoted as SSBperROwindow) of SSBs corresponding to the first time domain position, a timing offset value (which may be denoted as T_offset), and second information mentioned below may be included in at least one of the following broadcast information: a system information block (system information block, SIB) 1, other system information (other system information, OSI), a master system information block (mater information block, MIB), and the like. The signaling is sent by the network device to a terminal device in a broadcast or multicast manner. Sending the signaling to the terminal device in the broadcast or multicast manner may avoid scheduling different resources for different terminal devices for the purpose of sending the signaling, thereby reducing signaling overheads for scheduling resources and reducing system scheduling complexity.

In addition, if any one or more of the plurality of pieces of information is sent in a radio resource control (radio resource control, RRC) connection establishment phase and a subsequent communication process, the network device may add the foregoing signaling to at least one of the following information: RRC signaling (for example, an RRC setup (RRCsetup) message, RRC reconfiguration signaling (RRCReconfiguration), or RRC resume signaling (RRCResume)), downlink control information (downlink control information, DCI), group DCI, a media access control (media access control, MAC) control element (control element, CE), or a timing advance command (timing advance command, TAC), or indicate the foregoing signaling/parameter value to the terminal device in a table, or send the information to the terminal device in a unicast or multicast manner along with data transmission or on a separately allocated PDSCH bearer. An advantage of sending the signaling to the terminal device separately or in a group is that a parameter value of each terminal device/each group of terminal devices may be flexibly controlled, and different parameter values are configured for the terminal device based on different positions or different areas in which the terminal device is located, to optimize a system parameter and communication performance of the terminal device/communication performance of a system. For example, a maximum round-trip delay between the terminal device and the base station may be determined based on a specific position or an approximate position or area of the terminal device, to determine a precise T_offset value. Different T_offset values may be configured for the terminal device, to reduce an access delay of each terminal device/each group of terminal devices, and improve communication efficiency between the terminal device and the system.

In a possible implementation, the first time domain position is associated with the timing offset value and second information, and the second information includes at least one of the following:
n first preset values, where n indicates an index position of the first SSB in the SSB set, n is a natural number, for example, when the index of the first SSB is SSB 0, the index position of the first SSB in the SSB set is "0", that is, a value of n is 0; when the index of the first SSB is SSB 1, the index position of the first SSB in the SSB set is "1", that is, a value of n is 1, ..., and so on, and n may alternatively be another value;
processing delay information;
positioning error information; or
ephemeris error information.

Specifically, the terminal device may determine, based on the second information, the first time domain position carrying the random access preamble. When the second information includes the n first preset values, the first time domain position is not limited by an SSB interval. When the second information includes at least one of the processing delay information, the positioning error information, and the ephemeris error information, accurate processing duration may be reserved for the terminal device, to improve the random access success rate.

The following describes a plurality of implementations of the second information by using examples.

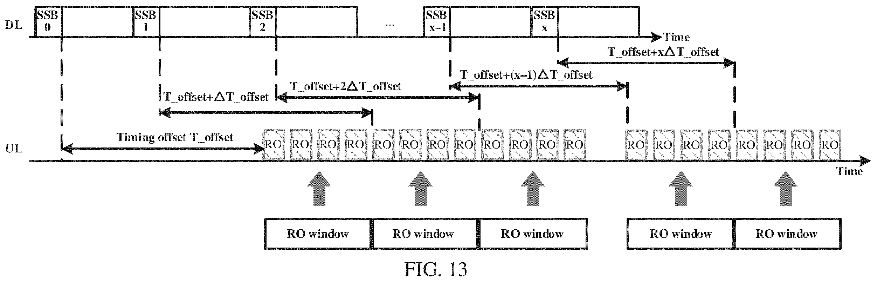

In an implementation in which the second information includes the n first preset values, a parameter △T_offset may be added, so that the RO window length is no longer limited by the SSB interval. For example, assuming that an interval between the SSB 0 and the SSB 1 is 2 ms, the RO window length ROwindow_length sent by the base station to the terminal device based on the solution in the foregoing embodiment cannot be greater than 2 ms. If the RO window length is greater than 2 ms, an RO window corresponding to the SSB 0 and an RO window corresponding to the SSB 1 overlap with each other, and mapping between an RO resource and the SSB is confused. As shown in FIG. 13, adding the parameter △T_offset is equivalent to increasing a distance between a start moment of the RO window corresponding to the SSB 0 and a start moment of the RO window corresponding to the SSB 1. A longer RO window length may be configured for the terminal device, in other words, a maximum RO window length may be equal to a sum of the SSB interval and a time length of △T_offset.

Optionally, the network side sends the timing offset value T_offset and the timing offset difference △T_offset (in other words, a first preset value is denoted as the timing offset difference △T_offset) to the terminal device. Then, the terminal device determines, based on a detected SSB index x (where x = 0, 1, 2...), that a to-be-used timing offset value is denoted as T_offset_use (that is, n is denoted as x). T_offset_use meets: $T_offset_use = T_offset + ΔT_offset \times x ;$

For example, if the SSB index detected and selected by the terminal device is 3, the timing offset value to be used by the terminal device is T_offset_use = T_offset + △T_offset × x, where a value of x is 3.

In an implementation in which the second information includes a processing delay, if the processing delay is considered, an offset △ value may be added to a T_offset value, to adapt to impact of processing delays of different devices. T_offset+△ represents a time offset length of the RO window relative to the end moment of the SSB. A value of △ may be agreed on by using a protocol. For example, △ is agreed on to be 1 ms or a slot length. Alternatively, the offset value △ may be configured for the terminal device through the network side. For example, the offset value △ is a length of two slots or a length of two data symbols (symbols). In this case, the terminal device uses T_offset+△ as the timing offset value. T_offset+△ indicates that a time length represented by T_offset and a time length represented by △ are added. If time units of the two time lengths are different, simple time conversion is performed to obtain a same unit.

In an implementation in which the second information includes the positioning error information or the ephemeris error information, the network device may deliver the positioning error information or the ephemeris error information to the terminal device, so that the terminal device processes the timing offset value based on the positioning error information or the ephemeris error information, to eliminate an error as much as possible, and improve the random access success rate.

In a possible implementation, the first position includes any one of the following: a position that is within cell coverage and that is farthest from the network device, a position that is within beam coverage and that is farthest from the network device, and a position of the terminal device.

Based on the foregoing technical solution, the timing offset value is determined based on the round-trip delay between the first position in the area covered by the network device and the network device. The network device may configure a common timing offset value for a plurality of terminal devices in the coverage area. In other words, the first position is the position that is within the cell coverage and that is farthest from the network device, or the position that is within the beam coverage and that is farthest from the network device. This helps reduce the signaling overheads. Alternatively, the network device may separately configure a timing offset value for the terminal device in the coverage area. In other words, the first position is the position of the terminal device. This helps improve accuracy.

Based on the foregoing technical solution, after obtaining the first SSB in step S501, the terminal device sends, in step S502 based on the first time domain position associated with the timing offset value, the random access preamble corresponding to the first SSB. The timing offset value is determined based on the round-trip delay between the first position in the area covered by the network device and the network device. In other words, timing offset values used by terminal devices in different communication areas may be different. Therefore, after the terminal devices in the different communication areas receive SSBs, because the time domain position carrying the random access preamble sent by the terminal device is associated with the timing offset value, the network device distinguishes between the terminal devices in the different communication areas based on the time domain position carrying the random access preamble, to improve communication efficiency.

In a possible implementation, different from the implementation processes in FIG. 6 to FIG. 13, the network device may further distinguish between terminal devices in different communication areas in another manner. In this implementation, a representation range of an SSB index is extended.

In this implementation, the index of the first SSB obtained by the terminal device in step S501 is determined by third information, and a quantity of bits included in the third information is greater than or equal to 6. Then, the terminal device sends, in step S502, the random access preamble corresponding to the first SSB.

Optionally, the third information includes at least one of the following: one spare (spare) bit on a physical broadcast channel (physical broadcast channel, PBCH), one bit of intra-frequency reselection (intraFreReselection) (which indicates whether the intra-frequency cell reselection is allowed), and one bit of a choice (Choice) parameter (which indicates whether a master information block message (master information block, MIB) is extended).

It should be noted that, in this implementation, an existing configuration manner is still used, provided that each SSB (group) has a corresponding RO resource in a beam position scanning periodicity.

As shown in the foregoing Table 1, when the carrier frequency ≥ 6 GHz, an SSB index parameter (including 3 bits) in the physical broadcast channel (physical broadcast channel, PBCH) indicates three most significant bits of the SSB index, and a bearer of (including 3 bits) a demodulation reference signal (demodulation reference signal, DMRS) of the PBCH indicates three least significant bits of the SSB index. When the carrier frequency < 6 GHz, one bit of the SSB index parameter (including three bits) in the PBCH indicates an SSB subcarrier offset, and the remaining two bits are spare bits. However, in this implementation, one spare (spare) bit in the PBCH, one bit of an intra-frequency reselection (intraFreReselection) parameter (which indicates whether the intra-frequency cell reselection is allowed), and one bit of a choice (Choice) parameter (which indicates whether a master information block message (master information block, MIB) is extended) may indicate the SSB index, to be specific, indicate the three most significant bits of the SSB index. In this way, the SSB index has 9 bits in total, and may represent a maximum of 512 beam position (beam) numbers. Therefore, when the network device needs to provide a network service for a larger communication area, more SSB indexes are indicated by extending the bit that indicates the SSB index, so that the network device distinguishes between terminal devices in different communication areas.

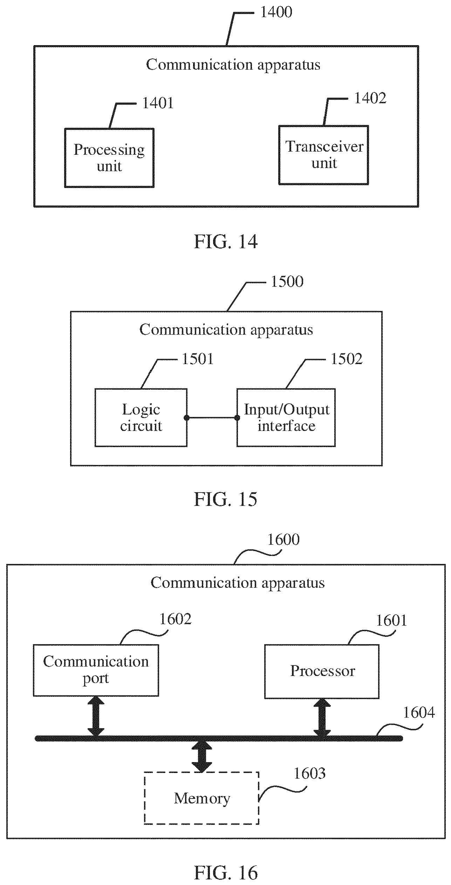

Refer to FIG. 14. An embodiment of this application provides a communication apparatus 1400. The communication apparatus 1400 may implement functions of the terminal device (or the network device) in the foregoing method embodiments, and therefore can also implement beneficial effects of the foregoing method embodiments. In this embodiment of this application, the communication apparatus 1400 may be a terminal device (or a network device), or may be an integrated circuit or an element, for example, a chip, in the terminal device (or the network device). In the following embodiment, an example in which the communication apparatus 1400 is a terminal device or a network device is used for description.

In a possible implementation, when the apparatus 1400 is configured to perform the method performed by the terminal device in any one of the foregoing embodiments, the apparatus 1400 includes a processing unit 1401 and a transceiver unit 1402.

The transceiver unit 1402 is configured to obtain a first synchronization signal block SSB.

The processing unit 1401 is configured to determine a random access preamble corresponding to the first SSB.

The transceiver unit 1402 is configured to send the random access preamble corresponding to the first SSB, where the random access preamble is carried at a first time domain position, the first time domain position is associated with a timing offset value, and the timing offset value is determined based on a round-trip delay between the network device and a first position in an area covered by the network device.

In a possible implementation, the first time domain position is obtained by offsetting a first moment based on the timing offset value, and the first moment is associated with the first SSB.

In a possible implementation, the first time domain position is located after a second moment obtained by offsetting the first moment by the timing offset value.

In a possible implementation, the first time domain position is located after a second moment obtained after the timing offset value offsets the first moment, and the first moment is associated with the first SSB.

In a possible implementation, a start moment of the first time domain position is the second moment.

In a possible implementation, the first time domain position is located in one or more pieces of time information after the second moment, and the time information includes a frame or a half-frame.

In a possible implementation, the first time domain position is located in k association periodicities adjacent to the second moment, the association periodicity is a periodicity of an RO resource corresponding to an SSB set in which the first SSB is located, and k is an integer greater than 0.

In a possible implementation, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

In a possible implementation,
the transceiver unit 1402 is further configured to obtain the timing offset value.

In a possible implementation, that the transceiver unit 1402 is configured to send the random access preamble corresponding to the first SSB includes:

The transceiver unit 1402 is configured to send, based on first information, the random access preamble corresponding to the first SSB, where the first information includes at least one of the following:
a time length of the first time domain position;
a quantity of random access channel occasion RO resources included in the first time domain position, where the RO resource is used to carry the random access preamble; or
a quantity of SSBs corresponding to the first time domain position.

In a possible implementation,
the transceiver unit 1402 is further configured to obtain the first information.

In a possible implementation, the first time domain position is associated with the timing offset value and second information, and the second information includes at least one of the following:
n first preset values, where n indicates an index position of the first SSB in the SSB set, and n is a natural number;
processing delay information;
positioning error information; or
ephemeris error information.

In a possible implementation, a value of the timing offset value is related to a value of an offset Koffset value, where the Koffset value is used to determine a scheduling interval of a physical uplink shared channel PUSCH signal.

In a possible implementation, the first position includes any one of the following:
a position that is within cell coverage and that is farthest from the network device, a position that is within beam coverage and that is farthest from the network device, and a position of the terminal device.

In a possible implementation, when the apparatus 1400 is configured to perform the method corresponding to the network device in any one of the foregoing embodiments, the apparatus 1400 includes a processing unit 1401 and a transceiver unit 1402.

The processing unit is configured to determine a first synchronization signal block SSB.

The transceiver unit 1402 is configured to send the first synchronization signal block SSB.

The transceiver unit 1402 is configured to obtain a random access preamble corresponding to the first SSB, where the random access preamble is carried at a first time domain position, the first time domain position is associated with a timing offset value, and the timing offset value is determined based on a round-trip delay between the network device and a first position in an area covered by the network device.

In a possible implementation, the first time domain position is obtained by offsetting a first moment based on the timing offset value, and the first moment is associated with the first SSB.

In a possible implementation, the first time domain position is located after a second moment obtained by offsetting the first moment by the timing offset value.

In a possible implementation, the first time domain position is located after a second moment obtained after the timing offset value offsets the first moment, and the first moment is associated with the first SSB.

In a possible implementation, a start moment of the first time domain position is the second moment.

In a possible implementation, the first time domain position is located in one or more pieces of time information after the second moment, and the time information includes a frame or a half-frame.

In a possible implementation, the first time domain position is located in k association periodicities adjacent to the second moment, the association periodicity is a periodicity of an RO resource corresponding to an SSB set in which the first SSB is located, and k is an integer greater than 0.

In a possible implementation, the first moment includes at least one of the following:
an end moment of a time domain position of the first SSB;
a start moment of a time domain position of the first SSB;
an end moment of a slot in which a time domain position of the first SSB is located;
a start moment of a slot in which a time domain position of the first SSB is located;
an end moment of a time domain position of a second SSB, where the second SSB and the first SSB are located in a same SSB set, and an index of the second SSB is different from an index of the first SSB;
a start moment of a time domain position of a second SSB;
an end moment of a slot in which a time domain position of a second SSB is located; or
a start moment of a slot in which a time domain position of a second SSB is located.

In a possible implementation, the transceiver unit 1402 is further configured to send the timing offset value.

In a possible implementation, that the transceiver unit 1402 is configured to obtain a random access preamble corresponding to the first SSB includes:

The transceiver unit 1402 is configured to obtain, based on first information, the random access preamble corresponding to the first SSB, where the first information indicates at least one of the following:
a time length of the first time domain position;
a quantity of random access channel occasion RO resources included in the first time domain position, where the RO resource is used to carry the random access preamble; or
a quantity of SSBs corresponding to the first time domain position.

In a possible implementation, the transceiver unit 1402 is further configured to send the first information.

In a possible implementation, the first time domain position is associated with the timing offset value and second information, and the second information includes at least one of the following:
n first preset values, where n indicates an index position of the first SSB in the SSB set, and n is a natural number;
processing delay information;
positioning error information; or
ephemeris error information.

In a possible implementation, a value of the timing offset value is related to a value of an offset Koffset value, where the Koffset value is used to determine a scheduling interval of a physical uplink shared channel PUSCH signal.

In a possible implementation, the first position includes any one of the following:
a position that is within cell coverage and that is farthest from the network device, a position that is within beam coverage and that is farthest from the network device, and a position of the terminal device.

It should be noted that, for content such as an information execution process of the units in the communication apparatus 1400, refer to the descriptions in the foregoing method embodiments of this application. Details are not described herein again.

FIG. 15 is a schematic diagram of another structure of a communication apparatus 1500 according to this application. The communication apparatus 1500 includes at least an input/output interface 1502. The communication apparatus 1500 may be a chip or an integrated circuit.

Optionally, the communication apparatus further includes a logic circuit 1501.

The transceiver unit 1402 shown in FIG. 14 may be a communication interface. The communication interface may be the input/output interface 1502 in FIG. 15. The input/output interface 1502 may include an input interface and an output interface. Alternatively, the communication interface may be a transceiver circuit, and the transceiver circuit may include an input interface circuit and an output interface circuit.

Optionally, the input/output interface 1502 is configured to obtain a first SSB; the logic circuit 1501 is configured to determine a random access preamble corresponding to the first SSB; and the input/output interface 1502 is further configured to send the random access preamble corresponding to the first SSB. The input/output interface 1502 may further perform another step performed by the terminal device in any one of the foregoing embodiments, and implement corresponding beneficial effects. Details are not described herein again.

Optionally, the logic circuit 1501 is configured to determine a first SSB; the input/output interface 1502 is configured to send the first SSB; and the input/output interface 1502 is further configured to send a random access preamble corresponding to the first SSB. The input/output interface 1502 may further perform another step performed by the network device in any one of the embodiments, and implement corresponding beneficial effects. Details are not described herein again.

In a possible implementation, the processing unit 1401 shown in FIG. 14 may be the logic circuit 1501 in FIG. 15.

Optionally, the logic circuit 1501 may be a processing apparatus. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any one of the method embodiments.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processor units, CPUs), network processors (network processors, NPs), digital signal processing (digital signal processors, DSPs), micro controller units (micro controller units, MCU), programmable logic devices (programmable logic devices, PLDs), or other integrated chips, or any combination of the foregoing chips or processors.

FIG. 16 shows a communication apparatus 1600 related to the foregoing embodiment according to an embodiment of this application. The communication apparatus 1600 may be specifically the communication apparatus used as the terminal device in the foregoing embodiment. An example shown in FIG. 16 is that the terminal device is implemented through a terminal device (or a component in a terminal device).

In a possible schematic diagram of a logical structure of the communication apparatus 1600, the communication apparatus 1600 may include but is not limited to at least one processor 1601 and a communication port 1602.

Further, optionally, the apparatus may include a memory 1603 and/or a bus 1604. In this embodiment of this application, the at least one processor 1601 is configured to control on an action of the communication apparatus 1600.

In addition, the processor 1601 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for detailed working processes of the foregoing system, apparatus, and unit, refer to corresponding processes in the foregoing method embodiments. Details are not described herein again.

It should be noted that, the communication apparatus 1600 shown in FIG. 16 may be specifically configured to implement steps implemented by the terminal device in the foregoing method embodiments, and implement technical effects corresponding to the terminal device. For a specific implementation of the communication apparatus shown in FIG. 16, refer to the descriptions in the foregoing method embodiments. Details are not described herein again.

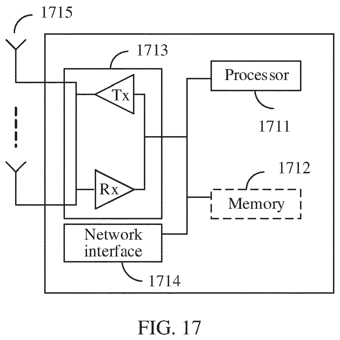

FIG. 17 is a schematic diagram of a structure of a communication apparatus 1700 related to the foregoing embodiment according to an embodiment of this application. The communication apparatus 1700 may be specifically the communication apparatus used as the network device in the foregoing embodiment. An example shown in FIG. 17 is that the network device is implemented through a network device (or a component in a network device). For the structure of the communication apparatus, refer to the structure shown in FIG. 17.

The communication apparatus 1700 includes at least one processor 1711 and at least one network interface 1714. Further, optionally, the communication apparatus further includes at least one memory 1712, at least one transceiver 1713, and one or more antennas 1715. The processor 1711, the memory 1712, the transceiver 1713, and the network interface 1714 are connected to each other, for example, through a bus. In this embodiment of this application, the connection may include various types of interfaces, transmission lines, buses, or the like. This is not limited in this embodiment. The antenna 1715 is connected to the transceiver 1713. The network interface 1714 is configured to enable the communication apparatus to communicate with another communication device through a communication link. For example, the network interface 1714 may include a network interface between the communication apparatus and a core network device, for example, an S1 interface. The network interface may include a network interface between the communication apparatus and another communication apparatus (for example, another network device or core network device), for example, an X2 or Xn interface.

The processor 1711 is mainly configured to: process a communication protocol and communication data; control the entire communication apparatus; execute a software program; and process data of the software program. For example, the processor 1711 is configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1711 in FIG. 17. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1712 may exist independently, and is connected to the processor 1711. Optionally, the memory 1712 may be integrated with the processor 1711, for example, integrated into one chip. The memory 1712 can store program code for executing the technical solutions in embodiments of this application, and the processor 1711 controls the execution. Various types of executed computer program code may also be considered as drivers of the processor 1711.

FIG. 17 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1713 may be configured to support receiving or sending of a radio frequency signal between the communication apparatus and a terminal, and the transceiver 1713 may be connected to the antenna 1715. The transceiver 1713 includes a transmitter Tx and a receiver Rx. Specifically, the one or more antennas 1715 may receive a radio frequency signal. The receiver Rx in the transceiver 1713 is configured to: receive the radio frequency signal from the antenna, convert the radio frequency signal into a digital baseband signal or a digital intermediate frequency signal, and provide the digital baseband signal or the digital intermediate frequency signal for the processor 1711, so that the processor 1711 performs further processing, for example, demodulation and decoding, on the digital baseband signal or the digital intermediate frequency signal. In addition, the transmitter Tx in the transceiver 1713 is further configured to: receive a modulated digital baseband signal or digital intermediate frequency signal from the processor 1711, convert the modulated digital baseband signal or digital intermediate frequency signal into a radio frequency signal, and send the radio frequency signal through the one or more antennas 1715. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion is adjustable. The transmitter Tx may selectively perform one-level or multi-level up-conversion mixing processing and digital-to-analog conversion on the modulated digital baseband signal or digital intermediate frequency signal, to obtain the radio frequency signal. A sequence of the up-conversion mixing processing and the digital-to-analog conversion is adjustable. The digital baseband signal and the digital intermediate frequency signal may be collectively referred to as a digital signal.

The transceiver 1713 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiving machine, an input port, a receiving circuit, or the like. The sending unit may be referred to as a transmitting machine, a transmitter, a transmitting circuit, or the like.

It should be noted that, the communication apparatus 1700 shown in FIG. 17 may be specifically configured to implement steps implemented by the network device in the foregoing method embodiments, and implement technical effects corresponding to the network device. For a specific implementation of the communication apparatus 1700 shown in FIG. 17, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The network system architecture includes the terminal device and the network device in any one of the foregoing embodiments.

In the several embodiments provided in this application, it should be understood that the disclosed system, apparatus, and method may be implemented in another manner. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for enabling a computer device (which may be a personal computer, a server, or a network device) to perform all or some of the steps of the methods described in embodiments of this application. The storage medium includes any medium that may store program code, such as a USB flash drive, a removable hard disk, a read-only memory (ROM, Read-Only Memory), a random access memory (RAM, Random Access Memory), a magnetic disk, or an optical disc.

## Claims

1. A communication method for a terminal device (1600), comprising:
obtaining, a first synchronization signal block, SSB (S501) from a network device (1700);
sending, to the network device (1700), a random access preamble corresponding to the first SSB (S502), wherein the random access preamble is carried at a first time domain position, the first time domain position is associated with a timing offset value, wherein the timing offset value is determined by the network device (1700) based on a round-trip delay between the network device (1700) and a first position in an area covered by the network device (1700); and
obtaining the first time domain position by offsetting a first moment based on the timing offset value, and the first moment is associated with the first SSB.

2. The method according to claim 1, wherein the first moment comprises at least one of the following:
an end moment of a time domain position of the first SSB;
a start moment of a time domain position of the first SSB;
an end moment of a slot in which a time domain position of the first SSB is located; or
a start moment of a slot in which a time domain position of the first SSB is located.

3. The method according to claim 1 or 2, wherein the sending, a random access preamble corresponding to the first SSB comprises:
sending, based on first information, the random access preamble corresponding to the first SSB, wherein the first information comprises at least one of the following:
a time length of the first time domain position;
a quantity of random access channel occasion, RO, resources comprised in the first time domain position, wherein the RO resource is used to carry the random access preamble; or
a quantity of SSBs corresponding to the first time domain position.

4. The method according to any one of claims 1 to 3, wherein
the first time domain position is associated with the timing offset value and second information, and the second information comprises at least one of the following:
n first preset values, wherein n indicates an index position of the first SSB in an SSB set, and n is a natural number;
processing delay information;
positioning error information; or
ephemeris error information.

5. The method according to any one of claims 1 to 4, wherein
a value of the timing offset value is related to a value of an offset Koffset value, wherein the Koffset value is used to determine a scheduling interval of a physical uplink shared channel , PUSCH, signal.

6. A communication method for a network device (1700), comprising:
sending, a first synchronization signal block SSB, (S501) to a terminal device (1600);
obtaining, from the terminal device (1600), a random access preamble corresponding to the first SSB (S502), wherein the random access preamble is carried at a first time domain position, wherein the first time domain position is determined by the terminal device and is associated with a timing offset value; and
determining the timing offset value based on a round-trip delay between the network device (1700) and a first position in an area covered by the network device (1700); wherein the first time domain position is obtained by the terminal device (1600) by offsetting a first moment based on the timing offset value, and the first moment is associated with the first SSB.

7. The method according to claim 6, wherein the first moment comprises at least one of the following:
an end moment of a time domain position of the first SSB;
a start moment of a time domain position of the first SSB;
an end moment of a slot in which a time domain position of the first SSB is located; or
a start moment of a slot in which a time domain position of the first SSB is located.

8. The method according to claim 6 or 7, wherein the obtaining, a random access preamble corresponding to the first SSB comprises:
obtaining, based on first information, the random access preamble corresponding to the first SSB, wherein the first information indicates at least one of the following:
a time length of the first time domain position;
a quantity of random access channel occasion, RO, resources comprised in the first time domain position, wherein the RO resource is used to carry the random access preamble; or
a quantity of SSBs corresponding to the first time domain position.

9. The method according to any one of claims 6 to 8, wherein
the first time domain position is associated with the timing offset value and second information, and the second information comprises at least one of the following:
n first preset values, wherein n indicates an index position of the first SSB in an SSB set, and n is a natural number;
processing delay information;
positioning error information; or
ephemeris error information.

10. The method according to any one of claims 6 to 9, wherein
a value of the timing offset value is related to a value of an offset Koffset value, wherein the Koffset value is used to determine a scheduling interval of a physical uplink shared channel, PUSCH, signal.

11. An apparatus configured to cause a terminal device (1600) to perform any of the methods according to claims 1 to 5.

12. An apparatus configured to cause a network device (1700) to perform any of the methods according to claims 6 to 10.

13. A computer-readable storage medium comprising instructions which, when executed by a computer, cause the computer to carry out the method according to any one of claims 1 to 10.

## Patentansprüche

1. Kommunikationsverfahren für eine Endgeräteeinrichtung (1600), umfassend:
Erhalten eines ersten Synchronisationssignalblocks, SSB, (S501) von einer Netzwerkeinrichtung (1700);
Senden einer Direktzugriffspräambel, die dem ersten SSB (S502) entspricht, an die Netzwerkeinrichtung (1700), wobei die Direktzugriffspräambel an einer ersten Zeitbereichsposition übertragen wird, wobei die erste Zeitbereichsposition mit einem Zeitversatzwert verknüpft ist, wobei der Zeitversatzwert durch die Netzwerkeinrichtung (1700) basierend auf einer Umlaufverzögerung zwischen der Netzwerkeinrichtung (1700) und einer ersten Position in einem Bereich, der durch die Netzwerkeinrichtung (1700) abgedeckt ist, bestimmt ist; und
Erhalten der ersten Zeitbereichsposition durch Versetzen eines ersten Moments basierend auf dem Zeitversatzwert und wobei der erste Moment mit dem ersten SSB verknüpft ist.

2. Verfahren nach Anspruch 1, wobei der erste Moment mindestens eines der Folgenden umfasst:
einen Endmoment einer Zeitbereichsposition des ersten SSB;
einen Startmoment einer Zeitbereichsposition des ersten SSB;
einen Endmoment eines Slots, in dem sich eine Zeitbereichsposition des ersten SSB befindet; oder
einen Startmoment eines Slots, in dem sich eine Zeitbereichsposition des ersten SSB befindet.

3. Verfahren nach Anspruch 1 oder 2, wobei das Senden einer Direktzugriffspräambel, die dem ersten SSB entspricht, Folgendes umfasst:
Senden der Direktzugriffspräambel, die dem ersten SSB entspricht, basierend auf ersten Informationen, wobei die ersten Informationen mindestens eines der Folgenden umfassen:
eine Zeitlänge der ersten Zeitbereichsposition;
eine Anzahl von Direktzugriffskanalgelegenheits(RO)-Ressourcen, die in der ersten Zeitbereichsposition enthalten sind, wobei die RO-Ressource verwendet wird, um die Direktzugriffspräambel zu übertragen; oder
eine Anzahl von SSBs, die der ersten Zeitbereichsposition entsprechen.

4. Verfahren nach einem der Ansprüche 1 bis 3, wobei
die erste Zeitbereichsposition mit dem Zeitversatzwert und zweiten Informationen verknüpft ist und die zweiten Informationen mindestens eines der Folgenden umfassen:
n erste voreingestellte Werte, wobei n eine Indexposition des ersten SSB in einem SSB-Satz angibt und n eine natürliche Zahl ist;
Verarbeiten von Verzögerungsinformationen;
Positionieren von Fehlerinformationen; oder
Ephemeridenfehlerinformationen.

5. Verfahren nach einem der Ansprüche 1 bis 4, wobei
ein Wert des Zeitversatzwerts mit einem Wert eines Versatz-Koffset-Werts in Beziehung steht, wobei der Koffset-Wert verwendet wird, um ein Planungsintervall eines Signals eines gemeinsam genutzten physischen Uplink-Kanals, PUSCH, zu bestimmen.

6. Kommunikationsverfahren für eine Netzwerkeinrichtung (1700), umfassend:
Senden eines ersten Synchronisationssignalblocks, SSB, (S501) an eine Endgeräteeinrichtung (1600);
Erhalten einer Direktzugriffspräambel, die dem ersten SSB entspricht (S502), von der Endgeräteeinrichtung (1600), wobei die Direktzugriffspräambel an einer ersten Zeitbereichsposition übertragen wird, wobei die erste Zeitbereichsposition durch die Endgeräteeinrichtung bestimmt ist und mit einem Zeitversatzwert verknüpft ist; und
Bestimmen des Zeitversatzwerts basierend auf einer Umlaufverzögerung zwischen der Netzwerkeinrichtung (1700) und einer ersten Position in einem Bereich, der durch die Netzwerkeinrichtung (1700) abgedeckt ist; wobei die erste Zeitbereichsposition durch die Endgeräteeinrichtung (1600) durch Versetzen eines ersten Moments basierend auf dem Zeitversatzwert erhalten wird und der erste Moment mit dem ersten SSB verknüpft ist.

7. Verfahren nach Anspruch 6, wobei der erste Moment mindestens eines der Folgenden umfasst:
einen Endmoment einer Zeitbereichsposition des ersten SSB;
einen Startmoment einer Zeitbereichsposition des ersten SSB;
einen Endmoment eines Slots, in dem sich eine Zeitbereichsposition des ersten SSB befindet; oder
einen Startmoment eines Slots, in dem sich eine Zeitbereichsposition des ersten SSB befindet.

8. Verfahren nach Anspruch 6 oder 7, wobei das Erhalten einer Direktzugriffspräambel, die dem ersten SSB entspricht, Folgendes umfasst:
Erhalten der Direktzugriffspräambel, die dem ersten SSB entspricht, basierend auf ersten Informationen, wobei die ersten Informationen mindestens eines der Folgenden angeben:
eine Zeitlänge der ersten Zeitbereichsposition;
eine Anzahl von Direktzugriffskanalgelegenheits(RO)-Ressourcen, die in der ersten Zeitbereichsposition enthalten sind, wobei die RO-Ressource verwendet wird, um die Direktzugriffspräambel zu übertragen; oder
eine Anzahl von SSBs, die der ersten Zeitbereichsposition entsprechen.

9. Verfahren nach einem der Ansprüche 6 bis 8, wobei
die erste Zeitbereichsposition mit dem Zeitversatzwert und zweiten Informationen verknüpft ist und die zweiten Informationen mindestens eines der Folgenden umfassen:
n erste voreingestellte Werte, wobei n eine Indexposition des ersten SSB in einem SSB-Satz angibt und n eine natürliche Zahl ist;
Verarbeiten von Verzögerungsinformationen;
Positionieren von Fehlerinformationen; oder
Ephemeridenfehlerinformationen.

10. Verfahren nach einem der Ansprüche 6 bis 9, wobei
ein Wert des Zeitversatzwerts mit einem Wert eines Versatz-Koffset-Werts in Beziehung steht, wobei der Koffset-Wert verwendet wird, um ein Planungsintervall eines Signals eines gemeinsam genutzten physischen Uplink-Kanals, PUSCH, zu bestimmen.

11. Vorrichtung, die konfiguriert ist, um eine Endgeräteeinrichtung (1600) dazu zu veranlassen, eines der Verfahren nach den Ansprüchen 1 bis 5 durchzuführen.

12. Vorrichtung, die konfiguriert ist, um eine Netzwerkeinrichtung (1700) dazu zu veranlassen, eines der Verfahren nach den Ansprüchen 6 bis 10 durchzuführen.

13. Computerlesbares Speichermedium, umfassend Anweisungen, die, wenn sie durch einen Computer ausgeführt werden, den Computer dazu veranlassen, das Verfahren nach einem der Ansprüche 1 bis 10 vorzunehmen.

## Revendications

1. Procédé de communication pour un dispositif terminal (1600), comprenant :
l'obtention d'un premier bloc de signal de synchronisation, SSB (S501) à partir d'un dispositif de réseau (1700) ;
l'envoi, au dispositif de réseau (1700), d'un préambule d'accès aléatoire correspondant au premier SSB (S502), dans lequel le préambule d'accès aléatoire est transporté à une première position de domaine temporel, la première position de domaine temporel est associée à une valeur de décalage temporel, dans lequel la valeur de décalage temporel est déterminée par le dispositif de réseau (1700) sur la base d'un délai aller-retour entre le dispositif de réseau (1700) et une première position dans une zone couverte par le dispositif de réseau (1700) ; et
l'obtention de la première position de domaine temporel en décalant un premier moment sur la base de la valeur de décalage temporel, et le premier moment est associé au premier SSB.

2. Procédé selon la revendication 1, dans lequel le premier moment comprend au moins l'un des éléments suivants :
un moment de fin d'une position de domaine temporel du premier SSB ;
un moment de début d'une position de domaine temporel du premier SSB ;
un moment de fin d'un créneau dans lequel se situe une position de domaine temporel du premier SSB ; ou
un moment de début d'un créneau dans lequel se situe une position de domaine temporel du premier SSB.

3. Procédé selon la revendication 1 ou 2, dans lequel l'envoi d'un préambule d'accès aléatoire correspondant au premier SSB comprend :
l'envoi, sur la base de premières informations, du préambule d'accès aléatoire correspondant au premier SSB, dans lequel les premières informations comprennent au moins l'un des éléments suivants :
une durée temporelle de la première position de domaine temporel ;
une quantité de ressources d'occasions de canal d'accès aléatoire, RO, comprises dans la première position de domaine temporel, dans lequel la ressource RO est utilisée pour transporter le préambule d'accès aléatoire ; ou
une quantité de SSB correspondant à la première position de domaine temporel.

4. Procédé selon l'une quelconque des revendications 1 à 3, dans lequel
la première position de domaine temporel est associée à la valeur de décalage temporel et à de secondes informations, et les secondes informations comprennent au moins l'un des éléments suivants :
n premières valeurs prédéfinies, dans lequel n indique une position d'indice du premier SSB dans un ensemble SSB, et n est un nombre naturel ;
des informations de délai de traitement ;
des informations d'erreur de positionnement ; ou
des informations d'erreur d'éphéméride.

5. Procédé selon l'une quelconque des revendications 1 à 4, dans lequel
une valeur de la valeur de décalage temporel est liée à une valeur d'une valeur de décalage Koffset, dans lequel la valeur Koffset est utilisée pour déterminer un intervalle de planification d'un signal de canal partagé de liaison montante physique, PUSCH.

6. Procédé de communication pour un dispositif de réseau (1700), comprenant :
l'envoi d'un premier bloc de signal de synchronisation SSB, (S501) à un dispositif terminal (1600) ;
l'obtention, à partir du dispositif terminal (1600), d'un préambule d'accès aléatoire correspondant au premier SSB (S502), dans lequel le préambule d'accès aléatoire est transporté à une première position de domaine temporel, dans lequel la première position de domaine temporel est déterminée par le dispositif terminal et est associée à une valeur de décalage temporel ; et
la détermination de la valeur de décalage temporel sur la base d'un délai aller-retour entre le dispositif de réseau (1700) et une première position dans une zone couverte par le dispositif de réseau (1700) ; dans lequel la première position de domaine temporel est obtenue par le dispositif terminal (1600) en décalant un premier moment sur la base de la valeur de décalage temporel, et le premier moment est associé au premier SSB.

7. Procédé selon la revendication 6, dans lequel le premier moment comprend au moins l'un des éléments suivants :
un moment de fin d'une position de domaine temporel du premier SSB ;
un moment de début d'une position de domaine temporel du premier SSB ;
un moment de fin d'un créneau dans lequel se situe une position de domaine temporel du premier SSB ; ou
un moment de début d'un créneau dans lequel se situe une position de domaine temporel du premier SSB.

8. Procédé selon la revendication 6 ou 7, dans lequel l'obtention d'un préambule d'accès aléatoire correspondant au premier SSB comprend :
l'obtention, sur la base de premières informations, du préambule d'accès aléatoire correspondant au premier SSB, dans lequel les premières informations indiquent au moins l'un des éléments suivants :
une durée temporelle de la première position de domaine temporel ;
une quantité de ressources d'occasions de canal d'accès aléatoire, RO, comprises dans la première position de domaine temporel, dans lequel la ressource RO est utilisée pour transporter le préambule d'accès aléatoire ; ou
une quantité de SSB correspondant à la première position de domaine temporel.

9. Procédé selon l'une quelconque des revendications 6 à 8, dans lequel
la première position de domaine temporel est associée à la valeur de décalage temporel et à de secondes informations, et les secondes informations comprennent au moins l'un des éléments suivants :
n premières valeurs prédéfinies, dans lequel n indique une position d'indice du premier SSB dans un ensemble SSB, et n est un nombre naturel ;
des informations de délai de traitement ;
des informations d'erreur de positionnement ; ou
des informations d'erreur d'éphéméride.

10. Procédé selon l'une quelconque des revendications 6 à 9,
dans lequel
une valeur de la valeur de décalage temporel est liée à une valeur d'une valeur de décalage Koffset, dans lequel la valeur Koffset est utilisée pour déterminer un intervalle de planification d'un signal de canal partagé de liaison montante physique, PUSCH.

11. Appareil configuré pour amener un dispositif terminal (1600) à exécuter l'un quelconque des procédés selon les revendications 1 à 5.

12. Appareil configuré pour amener un dispositif de réseau (1700) à exécuter l'un quelconque des procédés selon les revendications 6 à 10.

13. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 10.
